# EUROPÄISCHE PATENTSCHRIFT

(11) **EP 4 256 538 B1**
(45) Veröffentlichungstag und Bekanntmachung des Hinweises auf die Patenterteilung: **19.02.2025**
(21) Anmeldenummer: 21835579.0
(22) Anmeldetag: 01.12.2021
(51) Int. Cl.: G07D 7/04, G07D 7/10, G07D 7/20, G07D 7/2033, G07D 7/202, G07D 7/12

(54) **SENSOR UND VERFAHREN ZUR PRÜFUNG VON WERTDOKUMENTEN**
SENSOR AND METHOD FOR VERIFYING VALUE DOCUMENTS
CAPTEUR ET PROCÉDÉ POUR VÉRIFIER DES DOCUMENTS DE VALEURS

(30) Priorität: 01.12.2020 DE 102020007322
(43) Veröffentlichungstag der Anmeldung: 11.10.2023
(73) Patentinhaber: Giesecke+Devrient Currency Technology GmbH, 81677 München (DE)
(72) Erfinder: STEIN, Dieter, 83607 Holzkirchen (DE); HOLL, Norbert, 82110 Germering (DE); SCHMALZ, Steffen, 81375 München (DE)
(74) Vertreter: Giesecke+Devrient IP
(86) Internationale Anmeldenummer: PCT/EP2021/000152
(87) Internationale Veröffentlichungsnummer: WO 2022/117222

(56) Entgegenhaltungen:
- US-A1- 2008 130 963
- US-A1- 2009 008 924
- US-B1- 8 634 066
- US-B2- 7 687 271

## Beschreibung

Die vorliegende Erfindung betrifft einen Sensor und ein Verfahren zur Prüfung von Wertdokumenten.

Unter Wertdokumenten werden dabei blattförmige Gegenstände verstanden, die z.B. einen monetären Wert oder eine Berechtigung repräsentieren und daher nicht beliebig durch Unbefugte herstellbar sein sollen. Sie weisen daher nicht einfach herzustellende Sicherheitsmerkmale auf, deren Vorhandsein ein Indiz für die Echtheit ist. Wichtige Beispiele für solche Wertdokumente sind Chipkarten, Coupons, Gutscheine, Schecks und insbesondere Banknoten. Die Wertdokumente können sich jeweils durch ihren Typ unterscheiden, beispielsweise im Fall von Banknoten durch die Denomination bzw. den Nennwert und die Währung oder im Fall von Schecks einen durch den Herausgeber der Schecks gegebenen Scheckformulartyp.

Zur Absicherung gegenüber Fälschungen ist es bekannt, Wertdokumente mit magnetischen Fasern, die ein charakteristisches magnetisches Signal liefern oder mit Fasern auszustatten, die ein charakteristisches optisches Signal, z.B. eine charakteristische Remission oder Lumineszenz liefern. Häufig werden Wertdokumente mit lumineszierenden Melierfasern ausgestattet, die in bestimmter Weise oder zufällig über deren Fläche verteilt sind. Solche Melierfasern werden üblicherweise bei der Herstellung der Wertdokumente dem Papiersubstrat der Wertdokumente zugefügt. Es ist bekannt, mit Melierfasern ausgestattete Wertdokumente optisch anzuregen und die Melierfaser-Lumineszenz zu prüfen. Zur Unterscheidung echter Wertdokumente von Fälschungen wird üblicherweise geprüft, ob das jeweilige Wertdokument überhaupt lumineszierende Melierfasern aufweist oder nicht. US 8 634 066 B1 offenbart die Prüfung von Wertdokumenten, wobei diese Fasern enthalten, welche innerhalb einer Region der Dokumente zufällig verteilt sind.

US 2008/0130963 A1 offenbart die Prüfung von Dokumenten basierend auf den Fasern vorbestimmter Regionen. Dabei wird zum Erzeugen eines Identifiers eine oder mehrere Regionen ausgewählt und für diese aus dem Fasermuster ein Hash erzeugt. Der Ort der Regionen wird gespeichert, so dass bei der Prüfung das entsprechende Fasermuster erneut detektiert werden und verglichen werden kann.

Es treten immer wieder Fälschungen von Wertdokumenten auf, die im Folgenden auch als composed-Fälschung bezeichnet werden. Diese können dadurch entstehen, dass ein abgetrennter Teil eines Wertdokuments - meist durch Kleben - mit einem Substratabschnitt, beispielsweise einem geeignet geformten Stück Papier oder Folie so verbunden wird, dass ein Gebilde entsteht, das in etwa die Dimensionen des Wertdokuments aufweist. Ein Wertdokument kann z.B. in geschickter Weise in zwei Teile zerteilt werden, die dann jeweils mit einem geeigneten Substratabschnitt zusammengefügt werden. Hierdurch entstehen zwei Fälschungen des Wertdokuments, die je nach Ausführung der Fälschung nur schwer von den echten Wertdokumenten zu unterscheiden sein können.

Zur Erkennung von composed-Fälschungen sind verschiedene Verfahren bekannt, die z.B. auf die Erkennung von Klebestreifen oder eines Druckbildversatzes abzielen. Mit den bekannten Verfahren können jedoch nur manche composed-Fälschungen erkannt werden, während andere composed-Fälschungen unerkannt bleiben.

Der vorliegenden Erfindung liegt daher die Aufgabe zugrunde, einen Sensor und ein verbessertes Verfahren zum Prüfen eines Wertdokuments auf einen Verdacht für das Vorliegen einer Fälschung, insbesondere einer composed-Fälschung, bereitzustellen.

Diese Aufgabe wird durch die Merkmale der unabhängigen Ansprüche gelöst. In davon abhängigen Ansprüchen sind vorteilhafte Ausgestaltungen und Weiterbildungen der Erfindung angegeben.

Die Erfindung bezieht sich auf die Prüfung von Wertdokumenten, die eine Vielzahl von Fasern aufweisen, die über das Wertdokument verteilt sind und ein charakteristisches optisches oder magnetisches Signal aufweisen. Die Fasern können über einen oder mehrere Abschnitte des Wertdokuments oder über das gesamte Wertdokument (ungleichmäßig oder gleichmäßig) verteilt sein. Sie können z.B. im Substrat des Wertdokuments oder auf der Oberfläche des Substrats verteilt sein. Insbesondere unterscheiden sich die optischen und/oder magnetischen Eigenschaften bzw. Signale der Fasern von den optischen und/ oder magnetischen Eigenschaften bzw. Signalen des Substrats des Wertdokuments. Die Wertdokumente, die mit dem erfindungsgemäßen Verfahren geprüft werden, sind beispielsweise Banknoten, Schecks, Tickets, Gutscheine, etc.. Zur Prüfung solcher Wertdokumente, insbesondere zur Erkennung von Fälschungen, insbesondere composed-Fälschungen, wird das jeweils zu prüfende Wertdokument in einen Erfassungsbereich eines Sensors gebracht.

Der Sensor weist eine Bilderfassungseinrichtung auf, die dazu eingerichtet ist, ein Wertdokumentbild des Wertdokuments, vorzugsweise des gesamten Wertdokuments, zu erfassen. Insbesondere ist die Bilderfassungseinrichtung zur ortsaufgelösten Detektion optischer oder magnetischer Signale des Wertdokuments eingerichtet. Das Wertdokumentbild zeigt die zweidimensionale Verteilung optischer oder magnetischer Signale des Wertdokuments über das Wertdokument, vorzugsweise über das gesamte Wertdokument, und enthält bzw. zeigt ein charakteristisches optisches oder magnetisches Signal der Fasern. Der Sensor weist insbesondere auch eine Steuereinrichtung auf, die dazu eingerichtet ist, die Bilderfassungseinrichtung so anzusteuern, dass diese optische oder magnetische Signale des Wertdokuments ortsaufgelöst detektiert.

Des Weiteren weist der Sensor eine Auswerteeinrichtung auf, die zum Auswerten des Wertdokumentbilds eingerichtet ist. Die Auswerteeinrichtung ist dazu eingerichtet, die Fasern zu lokalisieren, die in dem jeweiligen Wertdokumentbild enthalten sind und für einen oder mehrere verschiedene Orte des Wertdokumentbilds jeweils mindestens einen lokalen Faser-Kennwert zu ermitteln, der für den jeweiligen Ort und ggf. für eine Umgebung des jeweiligen Orts auf dem Wertdokumentbild gilt. Die Auswerteeinrichtung ist außerdem dazu eingerichtet, das Wertdokument in Abhängigkeit des mindestens einen lokalen Faser-Kennwerts als fälschungsverdächtig zu klassifizieren, insbesondere in Abhängigkeit der für die verschiedenen Orte des Wertdokumentbilds ermittelten lokalen Faser-Kennwerte. Bei einer automatischen Bearbeitung der Wertdokumente mittels einer Wertdokumentbearbeitungsvorrichtung kann das fälschungsverdächtige Wertdokument dann von der Wertdokumentbearbeitungsvorrichtung automatisch aussortiert werden.

Die Auswerteeinrichtung ist dazu eingerichtet, das von der Bilderfassungseinrichtung erfasste Wertdokumentbild zu empfangen, das (z.B. von einem Prozessor oder der Bilderfassungseinrichtung) an die Auswerteeinrichtung übermittelt wird. Die Auswerteeinrichtung kann im Sensorgehäuse des Sensors angeordnet sein oder außerhalb des Sensorgehäuses. Sie kann auch eine zentrale Auswerteeinrichtung der Wertdokumentbearbeitungsvorrichtung sein, die die Messsignale mehrerer Sensoren (ggf. gemeinsam) auswertet.

Der jeweilige lokale Faser-Kennwert gilt individuell für den jeweiligen Ort des Wertdokumentbilds bzw. individuell für den jeweiligen Ort und dessen (räumliche) Umgebung auf dem Wertdokumentbild. Die Umgebung des jeweiligen Orts kann den jeweiligen Ort mit einschließen. Die Umgebungen verschiedener Orte sind nicht deckungsgleich, können aber miteinander überlappen. Im Allgemeinen unterscheiden sich die lokalen Faser-Kennwerte verschiedener Orte auf dem Wertdokument voneinander. Für den jeweiligen Ort und dessen Umgebung kann jeweils genau ein lokaler Faser-Kennwert oder für den jeweiligen Ort und dessen Umgebung können jeweils auch verschiedene lokale Faser-Kennwerte ermittelt und zur Klassifizierung des Wertdokuments verwendet werden.

Der jeweilige Ort, für den der mindestens einen lokale Faser-Kennwert ermittelt wird, und ggf. die Umgebung des jeweiligen Orts, entspricht z.B. einem Teilbild des Wertdokumentbilds oder einem Rasterpunkt, ggf. mit dem diesem zugeordneten Umgebungsbereich (wie weiter unten erläutert wird).

Beispielsweise ist der lokale Faser-Kennwert charakteristisch für die lokale Dichte der Fasern in der Umgebung des jeweiligen Orts und/ oder für die lokalen Verteilung der Fasern in der Umgebung des jeweiligen Orts und/ oder für die Position einer oder mehrerer Fasern in der Umgebung des jeweiligen Orts und/oder für die lokalen Beschaffenheit der Fasern in der Umgebung des jeweiligen Orts. Diese Beschaffenheit kann insbesondere das Aussehen der Fasern (z.B. die Form oder Größe oder Farbe oder Helligkeit der Fasern) an dem jeweiligen Ort und in der Umgebung des jeweiligen Orts betreffen oder - bei magnetischen Fasern - auch die Höhe des Magnetsignals der Fasern an dem jeweiligen Ort und in der Umgebung des jeweiligen Orts. Beispielsweise wird als lokaler Faser-Kennwert ein repräsentativer Wert, z.B. ein Mittelwert, der lokalen Beschaffenheit der Fasern an dem jeweiligen Ort und in der Umgebung des jeweiligen Orts verwendet. Alternativ wird als lokaler Faser-Kennwert der Abstand des jeweiligen Orts zur nächstgelegenen Faser verwendet, der charakteristisch für die lokale Position einer oder mehrerer Fasern in der Umgebung des jeweiligen Orts ist. Als lokaler Faser-Kennwert kann auch die Zugehörigkeit des jeweiligen Orts zu einem um die jeweilige Faser definierten Wirkungsbereich (wird weiter unten definiert) verwendet werden.

In bevorzugten Ausführungsbeispielen wird als lokaler Faser-Kennwert ein Maß für die lokale Dichte der Fasern verwendet. Dazu kann im jeweiligen Teilbild bzw. Umgebungsbereich als lokaler Faser-Kennwert die Anzahl der Fasern oder die Faser-Dichte (Faser-Anzahl dividiert durch die Fläche des Teilbilds/Umgebungsbereichs) verwendet werden oder ein für den Abstand zwischen den Fasern charakteristisches (z.B. statistisches) Abstandsmaß der dem jeweiligen Ort am nächsten gelegenen Fasern oder der Fasern im jeweiligen Teilbild/Umgebungsbereich des jeweiligen Orts, z.B. der mittlere Abstand dieser Fasern des Teilbilds/Umgebungsbereichs von der zur jeweiligen Faser am nächsten benachbarten Faser.

In anderen bevorzugten Ausführungsbeispielen wird als lokaler Faser-Kennwert ein Maß für die lokale Beschaffenheit der Fasern an dem Ort und ggf. in der Umgebung des jeweiligen Orts verwendet, die insbesondere die Form (z.B. Aspektverhältnis, Ausrichtung, Windung/en) oder Größe (z.B. Länge, Breite, Fläche) oder Farbe oder Helligkeit der Fasern an dem jeweiligen Ort und ggf. in der Umgebung des jeweiligen Orts betrifft.

Die Fasern, deren optische und/oder magnetische Eigenschaften sich von den optischen und/ oder magnetischen Eigenschaften des Substrats des Wertdokuments unterscheiden, sind einzelne dünne, längliche Objekte, z.B. mit einer Länge im Bereich weniger Millimeter. Mit dem Begriff Fasern sind in dieser Anmeldung nicht die Papierfasern des Papiersubstrats eines Wertdokuments gemeint. Die Faser sind getrennt von dem Substratmaterial des Wertdokuments hergestellt und werden nach ihrer Herstellung in bzw. auf das Substratmaterial des Wertdokuments ein- bzw. aufgebracht. Die Fasern sind z.B. aus Papier hergestellt oder aus einem Material, das sich vom Substratmaterial des Wertdokuments unterscheidet, z.B. aus Kunststoff oder aus Metall und das Substratmaterial des Wertdokuments aus Papier. Die Fasern sind zum Beispiel
- lumineszierende Fasern, die im oder auf dem Substrat eines nicht-lumineszierenden Wertdokumentsubstrats verteilt sind, oder
- magnetische Fasern, die im oder auf dem Substrat eines nicht-magnetischen Wertdokumentsubstrats verteilt sind, oder
- schwarze, graue, oder ein- oder mehrfarbige Fasern, die im oder auf dem Substrat eines hellen oder weißen Wertdokumentsubstrats verteilt sind.

Bei manchen Wertdokumentenarten sind die Fasern im Wesentlichen gleichmäßig über das jeweilige Wertdokument verteilt. Abweichungen von einer absolut gleichmäßigen Verteilung können durch statistische Schwankungen bei der Herstellung des Wertdokuments zustande kommen, etwa beim Aufbringen von Fasern auf die Wertdokumente oder beim Einbringen der Fasern in die Masse (z.B. in die Papiermasse oder Kunststoffmasse), aus der das Wertdokumentsubstrat hergestellt wird. Bei anderen Wertdokumentarten weisen die Wertdokumente nur einen oder mehrere bestimmte faserhaltige Bereiche auf, deren Lage auf dem Wertdokument fest vorgegeben ist.

Die Auswerteeinrichtung ist insbesondere dazu eingerichtet, eine Bildanalyse des Wertdokumentbilds durchzuführen, bei der - anhand der Signalverteilung der optischen oder magnetischen Signale - Fasern lokalisiert werden, die in dem Wertdokumentbild ggf. enthalten sind. Zum Identifizieren der Fasern können jeweils benachbarte Bildpunkte des Wertdokumentbilds gesucht werden, deren Signalintensität eine Schwelle überschreitet und geprüft werden, ob die sich aus solchen benachbarten Bildpunkten jeweils ergebende Objekte die erwartete Form, insbesondere Dicke und Länge und ggf. Form, einer Faser aufweist. Die lokalisierten Fasern können gleiche oder verschiedene Beschaffenheiten aufweisen, z.B. gleiche oder verschiedene Formen oder Farben.

Zu seiner Prüfung kann das Wertdokument statisch in den Erfassungsbereich des Sensors eingebracht sein. Als Sensor wird dann bevorzugt ein zweidimensionaler Bildsensor verwendet, der das von dem Wertdokument ausgehenden optischen oder magnetischen Signale detektiert. Bevorzugt wird das Wertdokument jedoch entlang einer Transportrichtung an dem Sensor vorbeitransportiert, um die verschiedenen Wertdokumentabschnitte nacheinander mit dem Sensor abzutasten. Als Sensor wird dann bevorzugt ein als Sensorzeile ausgebildeter optischer oder magnetischer Bildsensor verwendet.

In einer ersten Variante ist der Sensor ein magnetischer Sensor und die Bilderfassungseinrichtung zur ortsaufgelösten Detektion magnetischer Signale des Wertdokuments, insbesondere der Fasern, eingerichtet. Das Wertdokumentbild ist dann ein Magnetsignal-Bild des Wertdokuments. Und die Fasern sind magnetische Fasern, deren magnetische Eigenschaften sich von den magnetischen Eigenschaften des Substrats des Wertdokuments unterscheiden. Das charakteristische magnetische Signal der Fasern ist dann ein Magnetsignal der Fasern, das deutlich von dem üblicherweise geringen oder verschwindend kleinen Magnetsignal des wenig magnetischen oder unmagnetischen Wertdokumentsubstrats unterscheidet. Die Bilderfassungseinrichtung ist eine Magnetsignal-Bilderfassungseinrichtung, die zur ortsaufgelösten Detektion der magnetischen Signale der Fasern eingerichtet ist. Sie weist insbesondere eine Vielzahl magnetosensitiver Detektorelemente auf und kann z.B. eine hochauflösende Magnetdetektor-Zeile sein (zur Prüfung eines am Sensor vorbeitransportierten Wertdokuments) oder zweidimensional angeordnete magnetosensitive Detektorelemente aufweisen.

In einer zweiten Variante ist der Sensor ein optischer Sensor und die Bilderfassungseinrichtung ist zur ortsaufgelösten Detektion optischer Signale des Wertdokuments, insbesondere der Fasern, eingerichtet. Und die Fasern haben optische Eigenschaften, die sich von den optischen Eigenschaften des Substrats des Wertdokuments unterscheiden. Die Bilderfassungseinrichtung ist dann eine optische Bilderfassungseinrichtung (z.B. ein optischer Bildsensor), die zur ortsaufgelösten Detektion optischer Signale der Fasern eingerichtet ist, insbesondere einer Lumineszenz oder einer Remission der Fasern. Die Bilderfassungseinrichtung weist eine Vielzahl photosensitiver Elemente auf und ist beispielsweise eine Bildsensorzeile oder ein zweidimensionaler Bildsensor, z.B. auf CCD- oder CMOS-Basis. Das Wertdokumentbild kann ein Remissionsbild oder ein Lumineszenzbild des Wertdokuments sein.

Im Fall eines optischen Sensors kann zur Beleuchtung eines in den Erfassungsbereich des optischen Sensors eingebrachten Wertdokuments eine Beleuchtungseinrichtung verwendet werden, die Teil des Sensors sein kann. Sie kann zur Beleuchtung oder zur Lumineszenzanregung des Wertdokuments geeignet sein. Das zu prüfende Wertdokument wird so in den Erfassungsbereich des optischen Sensors eingebracht, dass es durch das Licht der Beleuchtungseinrichtung beleuchtet bzw. optisch angeregt werden kann und das von dem Wertdokument ausgehende Licht von der optischen Bilderfassungseinrichtung detektiert werden kann. Bei dem von dem Wertdokument ausgehenden Licht kann es sich um Remissionslicht handelt, also um von dem Wertdokument (gerichtete oder ungerichtet) reflektiertes Beleuchtungslicht der Beleuchtungseinrichtung. Alternativ kann es sich um Lumineszenzlicht handeln, welches das Wertdokument als Folge der zur optischen Anregung geeigneten Beleuchtung emittiert, welche die Beleuchtungseinrichtung emittiert. Der Begriff Lumineszenz wird als Oberbegriff über die nach (optischer oder elektrischer) Anregung von dem Wertdokument zurück emittierte Strahlung verstanden, z.B. Fluoreszenz oder Phosphoreszenz.

In einer ersten Ausführungsform der zweiten Variante ist der optische Sensor ein Remissionssensor und das Wertdokumentbild, zu dessen Erfassung die optische Bilderfassungseinrichtung eingerichtet ist, ein Remissionsbild des Wertdokuments. Das charakteristische optische Signal der Fasern ist dann ein Remissionssignal der Fasern. Im Remissionsbild erscheinen die Fasern z.B. schwarz, grau, oder farbig vor einem Hintergrund, den das Wertdokumentsubstrat oder andere Sicherheitsmerkmale des Wertdokuments bilden. Der Hintergrund kann dunkel, hell oder weiß, aber auch strukturiert oder mehrfarbig sein, solange sich das Remissionssignal der Fasern davon deutlich unterscheidet. Die Fasern können dabei lumineszierend oder nicht-lumineszierend sein, magnetisch oder nicht-magnetisch. Der Remissionssensor weist ggf. eine Beleuchtungseinrichtung auf, die dazu eingerichtet ist, das Wertdokument mit Beleuchtungslicht zu beleuchten.

In einer zweiten Ausführungsform der zweiten Variante sind die Fasern lumineszierende Fasern und der optische Sensor ist ein Lumineszenzsensor. Entsprechend ist dann das Wertdokumentbild, zu dessen Erfassung die optische Bilderfassungseinrichtung eingerichtet ist, ein Lumineszenzbild des Wertdokuments und das charakteristische optische Signal der Fasern ein Lumineszenzsignal der Fasern. Das Lumineszenzsignal kann ein Fluoreszenz- oder Phosphoreszenzsignal sein. Der Hintergrund des nicht-lumineszierenden Wertdokumentsubstrats ist dann üblicherweise dunkel. Der Lumineszenzsensor weist ggf. eine Beleuchtungseinrichtung auf, die dazu eingerichtet ist, das Wertdokument mit einem von der Beleuchtungseinrichtung emittierten Anregungslicht zu beleuchten, um die lumineszierenden Fasern des Wertdokuments optisch anzuregen. Alternativ kann die Lumineszenz der Faser aber auch elektrisch angeregt werden, falls es sich bei der Lumineszenz um eine Elektrolumineszenz handelt. Die Bilderfassungseinrichtung des Lumineszenzsensors ist eine optische Bilderfassungseinrichtung, die zum Erfassen des Lumineszenzbilds des Wertdokuments eingerichtet ist.

Alle folgenden Ausführungen beziehen sich sowohl auf die erste als auch auf die zweite Variante (und dabei beide Ausführungsformen der zweiten Variante) gleichermaßen.

Die Auswerteeinrichtung kann dazu eingerichtet sein, eines oder mehrere Teilbilder des Wertdokumentbilds zu bestimmen, die jeweils einen Ausschnitt des Wertdokumentbilds enthalten. Die Form der Teilbilder kann z.B. quadratisch, rechteckig, rund oder auch beliebig anders sein. Die Teilbilder enthalten z.B. nicht deckungsgleiche Ausschnitte des Wertdokumentbilds, die miteinander zum Teil überlappen können oder nicht überlappen. Durch das Überlappen mehrere Teilbilder wird die Wahrscheinlichkeit erhöht, dass eines der verwendeten Teilbilder gerade in einem gegebenenfalls vorhandenen gefälschten Abschnitt des Wertdokuments liegt (dessen Position nicht vorbekannt ist). Der lokale Faser-Kennwert des gefälschten Abschnitts weicht dann mehr von einem Erwartungswert ab als in dem Fall, wenn das Teilbild nur teilweise im gefälschten Abschnitt liegt. Die betreffende Fälschung wird bei überlappenden Teilbildern daher leichter entdeckt.

Das jeweilige Teilbild wird bevorzugt so bestimmt, dass in dem jeweiligen Teilbild das charakteristische optische oder magnetische Signal mehrerer Fasern des Wertdokuments erwartet wird. Die Auswerteeinrichtung ist z.B. dazu eingerichtet, für eines oder mehrere der Teilbilder jeweils den mindestens einen lokalen Faser-Kennwert zu bestimmen und das Wertdokument in Abhängigkeit des mindestens einen lokalen Faser-Kennwerts eines oder mehrerer der Teilbilder als fälschungsverdächtig zu klassifizieren (oder als nicht-fälschungsverdächtig). Die Position bzw. Größe der Teilbilder in dem Wertdokumentbild kann vorbestimmt sein oder dynamisch gewählt werden, z.B. in Abhängigkeit der Position der (zuvor lokalisierten) Fasern, oder in Abhängigkeit der Transportlage des Wertdokuments. Der lokale Faser-Kennwert ist z.B. für die lokale Dichte der Fasern im jeweiligen Teilbild und/ oder für die lokalen Verteilung der Fasern im jeweiligen Teilbild und/ oder für die Position einer oder mehrerer Fasern im jeweiligen Teilbild und/oder für die lokalen Beschaffenheit der Fasern im jeweiligen Teilbild charakteristisch.

In einer Weiterbildung der Erfindung ist die Auswerteeinrichtung zum Auswerten des Wertdokumentbilds dazu eingerichtet, das Wertdokumentbild unter Verwendung von Rasterpunkten (systematisch) punktweise abzurastern, wobei für jeden Rasterpunkt des Wertdokumentbilds ein lokaler Faser-Kennwert ermittelt wird, und das Wertdokument in Abhängigkeit der dabei ermittelten lokalen Faser-Kennwerte als fälschungsverdächtig zu klassifizieren. Der Rasterpunkt kann ein einzelner Bildpunkt des Wertdokumentbilds sein oder mehrere Bildpunkte des Wertdokumentbilds, die zu einem Rasterpunkt zusammengefasst werden. Die Rasterpunkte haben z.B. vordefinierte Positionen auf dem jeweiligen Wertdokumentbild und sind vorzugsweise gleichmäßig über das Wertdokument verteilt. Der für den jeweiligen Rasterpunkt bestimmte lokale Faser-Kennwert kann punktuell für den jeweiligen Rasterpunkt gelten oder für einen Umgebungsbereich des jeweiligen Rasterpunkts. Der Umgebungsbereich kann auch den jeweiligen Rasterpunkt enthalten. Der jeweilige Rasterpunkt, ggf. mit dem diesem zugeordneten Umgebungsbereich, kann jeweils einem Teilbild des Wertdokumentbilds entsprechen.

Der für jeden Rasterpunkt des Wertdokumentbilds ermittelte lokale Faser-Kennwert ist z.B. charakteristisch für die Dichte/ die Position/ die Beschaffenheit/ die Verteilung/die Anzahl/den Abstand einer oder mehrerer zu dem jeweiligen Rasterpunkt nächstgelegenen Fasern. Beispielweise kann ein mittlerer lokaler Faser-Kennwerts über mehrere Rasterpunkte ermittelt werden und die Streuung der lokalen Faser-Kennwerte um diesen Mittelwert, die sich bei Betrachtung mehrerer Rasterpunkte ergibt, zur Klassifizierung des Wertdokuments als fälschungsverdächtig verwendet werden. Bei zu großer Streuung wird das Wertdokument als fälschungsverdächtig aussortiert.

In einer Weiterbildung der Erfindung ist die Auswerteeinrichtung zum Auswerten des Wertdokumentbilds dazu eingerichtet, eine oder mehrere auffällige Rasterpunkte zu identifizieren, die im Hinblick auf den an dem jeweiligen Rasterpunkt ermittelten lokalen Faser-Kennwert auffällig sind, und, insbesondere anhand der Lage der auffälligen Rasterpunkte auf dem Wertdokumentbild, eine oder mehrere auffällige Regionen des Wertdokumentbilds zu identifizieren, in denen sich auffällige Rasterpunkte befinden. Die Auswerteeinrichtung klassifiziert dann das Wertdokuments als fälschungsverdächtig in Abhängigkeit einer oder mehrerer Eigenschaften der jeweiligen auffälligen Region und/ oder in Abhängigkeit der lokalen-Faser-Kennwerte, die für die Rasterpunkte der jeweiligen auffälligen Region ermittelt wurden (wozu die lokalen Faser-Kennwerte der auffälligen und ggf. auch der nicht-auffälligen Rasterpunkte herangezogen werden können, die in der auffälligen Region liegen).

Die Einstufung eines Rasterpunkts als auffällig erfolgt z.B. mittels Vergleichen des für den jeweiligen Rasterpunkt bestimmten lokalen Faser-Kennwerts mit einem für den jeweiligen lokalen Faser-Kennwert geltenden Erwartungswert. Bei Abweichung von mehr als einer akzeptablen Schwankungsbreite wird der jeweilige Rasterpunkt als auffällig eingestuft. Das Wertdokument kann z.B. dann als fälschungsverdächtig klassifiziert werden, wenn mindestens ein Mindestanteil der Rasterpunkte einer auffälligen Region auffällig ist. Oder das Wertdokument kann in Abhängigkeit eines mittleren lokalen Faser-Kennwerts, der über alle Rasterpunkte der jeweiligen auffälligen Region gemittelt ist, als fälschungsverdächtig klassifiziert werden. Alternativ kann auch die Streuung der lokalen Faser-Kennwerte um diesen Mittelwert, die sich bei Betrachtung mehrerer Umgebungsbereiche der auffälligen Region ergibt, zur Klassifizierung des Wertdokuments als fälschungsverdächtig verwendet werden.

Als auffällige Region wird z.B. das jeweilige Teilbild/der jeweilige Umgebungsbereich identifiziert. Alternativ kann die auffällige Region des Wertdokumentbilds erst anhand der Verteilung auffälliger Rasterpunkte, d.h. dynamisch, ermittelt werden. Insbesondere kann die Auswerteeinrichtung, zum Auswerten des Wertdokumentbilds dazu eingerichtet sein, die Verteilung der auffälligen Rasterpunkte zu bestimmen und anhand dieser eine oder mehrere auffällige Regionen zu ermitteln. Es können auch auffällige Teilbilder aus vorgegebenen Teilbildern ausgewählt werden. Alternativ können auf Basis der Verteilung auch auffällige Regionen variabler Form und Größe definiert werden, z.B. mittels einer Bildanalyse, bei der in jeder Zeile/Spalte /Zeilenabschnitt/Spaltenabschnitt des Wertdokumentbild ermittelt wird, wie groß der jeweilige Anteil von auffälligen Rasterpunkten an der/am Zeile/Spalte/Zeilenabschnitt/Spaltenabschnitt ist. Wenn dieser Anteil größer ist als ein Referenzwert, wird die jeweilige Zeile/Spalt/Zeilenabschnitt/Spaltenabschnitt als auffällig eingestuft. Aus den auffälligen Zeile/Spalt/Zeilenabschnitt/Spaltenabschnitten bzw. Rasterpunkten kann dann die auffällige Region gebildet werden, anhand deren Eigenschaften das Wertdokument als fälschungsverdächtig klassifiziert werden kann.

Die Eigenschaft/en der jeweiligen auffälligen Region, in Abhängigkeit derer das Wertdokument als fälschungsverdächtig klassifiziert wird, sind z.B. die Unterschiede der lokalen Faser-Kennwerte an den Rasterpunkten der auffälligen Region des Wertdokumentbilds im Vergleich zu einem für den jeweiligen lokalen Faser-Kennwert geltenden Erwartungswert und/ oder die Form der auffälligen Region bzw. die Verteilung mehrerer auffälligen Regionen über das Wertdokumentbild und/oder die Anzahl der in dem Wertdokumentbild gefundenen auffälligen Regionen. Der Erwartungswert kann vorbestimmt sein oder anhand der lokalen Faser-Kennwerte anderer Regionen des Wertdokumentbilds oder mit dem mittleren lokalen Faser-Kennwert des gesamten Wertdokumentbilds ermittelt worden sein.

In einigen Ausführungsbeispielen ist die Auswerteeinrichtung zum Auswerten des Wertdokumentbilds dazu eingerichtet, den oder zumindest einen der lokalen Faser-Kennwerte, der für den jeweiligen Rasterpunkt des Wertdokumentbilds ermittelt wird, für einen dem jeweiligen Rasterpunkt zugeordneten (flächigen) Umgebungsbereich zu ermitteln. Der jeweilige Rasterpunkt mit Umgebungsbereich kann eines der oben genannten Teilbilder des Wertdokumentbilds sein. Die Umgebungsbereiche können beim Abrastern mitlaufende Teilbilder bilden. Der dem jeweiligen Rasterpunkt zugeordnete Umgebungsbereich liegt vorzugsweise zumindest in der Nähe des jeweiligen Rasterpunkts, z.B. direkt daneben oder um den jeweiligen Rasterpunkt herum, sodass er jeweilige Rasterpunkt im jeweiligen Umgebungsbereichs liegt. Der jeweilige Rasterpunkt liegt z.B. am Rand oder im Inneren des ihm zugeordneten Umgebungsbereichs. Die Größe des Umgebungsbereichs kann fest vorgegeben sein oder auch in Abhängigkeit eines Dichte-Erwartungswerts der Fasern gewählt werden. Der jeweilige lokale Faser-Kennwert wird im Umgebungsbereich des jeweiligen Rasterpunkts ermittelt. Die Umgebungsbereiche benachbarter Rasterpunkte können miteinander überlappen oder nicht überlappen.

In anderen Ausführungsbeispielen ist die Auswerteeinrichtung, zum Auswerten des Wertdokumentbilds dazu eingerichtet, den oder einen der lokalen Faser-Kennwert/e, der für jeden Rasterpunkt des Wertdokumentbilds ermittelt wird, punktuell für den jeweiligen Rasterpunkt zu ermitteln. In diesem Fall wird der lokale Faser-Kennwert nur am jeweiligen Rasterpunkt selbst ermittelt. Entsprechend wird kein Umgebungsbereich des Rasterpunkts zur Bestimmung des jeweiligen lokale Faser-Kennwerts benötigt bzw. definiert. Beispielsweise kann der lokale Abstand des jeweiligen Rasterpunkts zur nächstgelegenen Faser als lokaler Faser-Kennwert verwendet werden oder die Zugehörigkeit des jeweiligen Rasterpunkts zu einem oder mehreren Wirkungsbereichen der Fasern (siehe unten).

Bevorzugt ist die Auswerteeinrichtung dazu eingerichtet, jedes der Teilbilder des Wertdokumentbilds so zu bestimmen, dass in dem jeweiligen Teilbild das charakteristische optische oder magnetische Signal einer Mindestanzahl an Fasern erwartet wird. Insbesondere kann in dem Sensor für eine oder mehrere Wertdokumentarten jeweils ein Dichte-Erwartungswert für die Flächendichte an Fasern bei der jeweiligen Wertdokumentart bereit gestellt sein. Insbesondere ist dies für solche Wertdokumentarten bevorzugt, bei deren Wertdokumenten die Fasern im Wesentlichen gleichmäßig (aber zufällig) über das jeweilige Wertdokument verteilt sind, entweder über das gesamte Wertdokument im Wesentlichen gleichmäßig verteilt oder zumindest über einen Abschnitt des Wertdokuments, in dem die Teilbilder bestimmt werden. Die Auswerteeinrichtung kann zum Bestimmen des mindestens einen Teilbilds des Wertdokumentbilds dazu eingerichtet sein, auf Basis des Dichte-Erwartungswerts der Fasern der zu prüfenden Wertdokumentart, den Flächeninhalt jedes Teilbilds des Wertdokumentbilds mindestens so groß zu wählen, dass - in Anbetracht einer zufälligen statistischen Verteilung der Fasern über das Wertdokument - erwartet wird, dass in dem jeweiligen Teilbild das charakteristische optische oder magnetische Signal von mindestens der Mindestanzahl an Fasern enthalten ist.

Beispielsweise kann die Auswerteeinrichtung dazu eingerichtet sein, beim Bestimmen des mindestens einen Teilbilds des Wertdokumentbilds, die Teilbilder so zu bestimmen, dass deren Flächeninhalt F jeweils mindestens die Mindestanzahl M dividiert durch den Dichte-Erwartungswert DE beträgt: F>=M/DE. Bei geringerem Dichte-Erwartungswert DE der Fasern legt der Sensor daher Teilbilder mit größerem Flächeninhalt fest. Dadurch wird sichergestellt, dass der Erwartungswert für die Anzahl an Fasern in dem jeweiligen Teilbild groß genug ist, um eine trennscharfe Prüfung zu ermöglichen. Denn eine Faseranzahl von Null bei einem echten, mit Fasern ausgestatteten Wertdokument ist dann sehr unwahrscheinlich. Die Wahrscheinlichkeit für irrtümliche Klassifizierung eines echten Wertdokuments als composed-Fälschung fällt mit zunehmendem Erwartungswert für die Anzahl an Fasern.

Bei größerem Erwartungswert wird die Wahrscheinlichkeit geringer, dass - bei einem echten Wertdokument mit gleichmäßiger Verteilung der Fasern - in dem zu prüfenden Teilbild eine sehr geringe Anzahl (z.B. Null) Fasern auftreten. Andernfalls, wenn in einem Teilbild nur wenige Fasern erwartet werden, könnte es auch bei einem echten Wertdokument vorkommen, dass in dem geprüften Teilbild zufällig keine Faser gefunden wird. Um zu vermeiden, dass echte Wertdokumente - aufgrund einer zu geringen Anzahl an in einem Teilbild gefundenen Fasern - versehentlich als fälschungsverdächtig klassifiziert werden, ist es daher vorteilhaft, Teilbilder zu definieren, die einen relativ großen Erwartungswert für die Anzahl an Fasern haben und/oder bei einem Wertdokument zwei oder mehrere Teilbilder zu bestimmen, die einen möglichst großen Flächenanteil des Wertdokuments abdecken.

Vorzugsweise ist die Auswerteeinrichtung dazu eingerichtet, mindestens zwei Teilbilder des Wertdokumentbilds zu bestimmen (die z.B. nebeneinander auf dem Wertdokumentbild angeordnet sind), insbesondere mindestens zwei solche Teilbilder des Wertdokumentbilds, die zusammen vorzugsweise mindestens 50% der Fläche einer Wertdokumentseite des Wertdokuments abdecken, insbesondere mindestens 75% der Fläche einer Wertdokumentseite des Wertdokuments. Die Teilbilder können ungleichmäßig über das Wertdokument verteilt sein oder gleichmäßig, z.B. zeilenweise und/oder spaltenweise, auf dem Wertdokument angeordnet sein. Insbesondere können die Teilbilder in einem Raster aus mindestens zwei Zeilen und/ oder mindestens zwei Spalten auf dem Wertdokument angeordnet sein. Die Auswerteeinrichtung kann auch dazu eingerichtet sein, beim Bestimmen der Teilbilder des Wertdokumentbilds das Wertdokumentbild im Wesentlichen flächendeckend auf mehrere Teilbilder aufzuteilen, z.B. unabhängig von der Wertdokumentart.

In einer Weiterbildung der Erfindung ist der Sensor zur Prüfung von Wertdokumenten einer oder mehrerer bestimmter Wertdokumentarten eingerichtet, deren Wertdokumente jeweils mindestens ein störendes (z.B. optisches oder magnetisches) Sicherheitselement aufweisen, welches die Erfassung des charakteristischen optischen oder magnetischen Signals der Fasern stört bzw. beeinträchtigt. Zur Prüfung solcher Wertdokumente ist die Auswerteeinrichtung des Sensors dazu eingerichtet, die Wertdokumente der bestimmten Wertdokumentart in Abhängigkeit des mindestens einen lokalen Faser-Kennwerts nur eines oder mehrerer solcher Orte des Wertdokumentbilds als fälschungsverdächtig zu klassifizieren, bei denen die Erfassung des optischen oder magnetischen Signals der Fasern nicht durch das bestimmte (z.B. optische oder magnetische) Sicherheitselement beeinträchtigt ist. Unter nicht beeinträchtigt wird verstanden, dass die optischen oder magnetischen Signale der Fasern durch die bestimmten Sicherheitselemente nicht beeinflusst oder allenfalls nur soweit beeinflusst werden, dass der mindestens eine lokale Faser-Kennwert des jeweiligen Orts - trotz des dort eventuell vorhandenen bestimmten Sicherheitselements - noch bestimmt werden kann. Damit werden solche Orte des Wertdokumentbilds ausgeschlossen bzw. vermieden, bei denen eine physikalische Abschirmung der optischen oder magnetischen Signale der Fasern z.B. durch absorbierende oder reflektierende Sicherheitselemente auftritt, oder bei denen eine störende Überlagerung mit optischen oder magnetischen Signalen der Sicherheitselemente auftritt. Bevorzugt werden nur solche Orte des Wertdokumentbilds ausgewählt bzw. der lokale Faser-Kennwert nur solcher Orte ausgewertet, die außerhalb eines störenden Sicherheitselemente liegen

Zum Beispiel erhält die Auswerteeinrichtung des Sensors im Vorfeld der Wertdokumentprüfung (z.B. bei der Sensoradaption) Informationen über die Positionen störender (optischer oder magnetischer) Sicherheitselemente der zu prüfenden Wertdokumente, ggf. für mehrere Wertdokumentarten. Die Auswerteeinrichtung kann dazu eingerichtet sein, auf Basis der Informationen über die Position eines oder mehrerer störender Sicherheitselemente, die beim Auswerten auszuwertenden Orte bzw. Teilbilder des jeweiligen Wertdokumentbilds derart zu bestimmen, dass die optischen oder magnetischen Signale der Fasern an dem jeweiligen Ort bzw. in dem jeweiligen Teilbild nicht durch ein störendes (z.B. optische oder magnetische) Sicherheitselement beeinträchtigt sind. Insbesondere kann die Position (und ggf. auch die Form oder Größe) der Teilbilder auf dem Wertdokument derart bestimmt werden, dass die Teilbilder mit keinem störenden Sicherheitselement überlappen.

Im Fall eines optischen Sensors werden beim Bestimmen der auszuwertenden Orte bzw. Teilbilder insbesondere solche Bereiche des Wertdokumentbilds übergangen bzw. ausgelassen, in denen fluoreszierende oder absorbierende optische Sicherheitselemente, wie z.B. Patches, Fluoreszenzelemente oder dunkel bedruckte Wertdokumentbereiche enthalten sind. Zum Beispiel werden die auszuwertenden Orte bzw. Teilbilder bevorzugt in weißen und in hell bedruckten Bereichen positioniert. Im Fall eines magnetischen Sensors werden beim Bestimmen der auszuwertenden Orte bzw. Teilbilder insbesondere solche Bereiche des Wertdokumentbilds übergangen bzw. ausgelassen, in denen magnetische Sicherheitselemente mit sehr großem Magnetsignal enthalten sind, z.B. ein magnetischer Sicherheitsfaden oder ein Magnetdruckbereich, dessen Magnetsignal in der Größenordnung des Magnetsignals der magnetischen Fasern liegt. Diese störenden magnetischen Sicherheitselemente können dabei auf der dem Sensor zugewandten Wertdokumentseite liegen oder auf der vom Sensor abgewandten Wertdokumentseite liegen (deren magnetisches Signal kann dennoch stören).

Die Auswerteeinrichtung des Sensors kann auch über eine Information über die Transportlage des jeweils zu prüfenden Wertdokuments und/oder über eine Information über die Wertdokumentart (z.B. Währung oder Denomination) des jeweils zu prüfenden Wertdokuments verfügen. Die Transportlage kann eine von 4 möglichen Transportlagen sein: Vorderseite des Wertdokuments oben /unten, ausgezeichnete Kante des Wertdokuments vorauslaufend/nachlaufend. Die Auswerteeinrichtung kann dazu eingerichtet sein, anhand der Information über die Transportlage und/ oder anhand der Information über die Wertdokumentart des jeweils zu prüfenden Wertdokuments nur solche Orte bzw. Teilbilder des Wertdokumentbilds zum Auswerten zu bestimmen, bei dem bzw. denen die Erfassung des optischen oder magnetischen Signals der Fasern nicht durch eines der störenden Sicherheitselemente beeinträchtigt ist. Das jeweils zu prüfende Wertdokument wird von der Auswerteeinrichtung dann in Abhängigkeit der lokalen Faser-Kennwerte nur der zum Auswerten bestimmten Orte bzw. bzw. Teilbilder als fälschungsverdächtig klassifiziert, d.h. in Abhängigkeit lokalen Faser-Kennwerts nur solcher Orte bzw. Teilbilder, bei denen die Erfassung des optischen oder magnetischen Signals der Fasern nicht durch ein störendes Sicherheitselement beeinträchtigt ist.

Beispielsweise erhält die Auswerteeinrichtung des Sensors im Vorfeld der Wertdokumentprüfung (z.B. bei der Sensoradaption) für eine oder mehrere Wertdokumentarten Informationen über die Position eines oder mehrerer störender (z.B. optischer oder magnetischer) Sicherheitselemente der jeweiligen Wertdokumentart in Abhängigkeit der Wertdokumentart der Wertdokumente und/ oder in Abhängigkeit der Transportlage der Wertdokumente. Die Auswerteeinrichtung kann z.B. dazu eingerichtet sein, - anhand der Information über die Wertdokumentart des jeweils zu prüfenden Wertdokuments und unter Verwendung der Informationen über die Position des/der störenden (optischen oder magnetischen) Sicherheitselements/e der jeweiligen Wertdokumentart in Abhängigkeit der Wertdokumentart - nur solche Orte bzw. Teilbilder des jeweils zu prüfenden Wertdokuments zum Auswerten zu bestimmen, bei denen die Erfassung des optischen oder magnetischen Signals der Fasern nicht durch ein störendes Sicherheitselement beeinträchtigt ist. Zusätzlich oder alternativ kann die Auswerteeinrichtung dazu eingerichtet sein, - anhand der Information über die Transportlage des jeweils zu prüfenden Wertdokuments und unter Verwendung der Informationen über die Position des/der störenden (optischen oder magnetischen) Sicherheitselemente der jeweiligen Wertdokumentart in Abhängigkeit der Transportlage der Wertdokumente - nur solche Orte bzw. Teilbilder des jeweils zu prüfenden Wertdokuments zum Auswerten zu bestimmen, bei denen die Erfassung des optischen oder magnetischen Signals der Fasern nicht durch ein störendes Sicherheitselemente beeinträchtigt ist.

Die Informationen über die Transportlage bzw. Wertdokumentart des jeweils zu prüfenden Wertdokuments kann in dem Sensor selbst bereit gestellt sein (z.B. in Fällen, in denen sie unveränderlich ist), z.B. in einem Datenspeicher des Sensors hinterlegt sein und an die Auswerteeinrichtung übermittelt werden, oder der Auswerteeinrichtung von außerhalb des Sensors zugeführt werden, z.B. von einem anderen Sensor der Wertdokumentbearbeitungsvorrichtung, der die Transportlage bzw. die Wertdokumentart des jeweils zu prüfenden Wertdokuments erkannt hat oder von einer anderen Einrichtung der Wertdokumentbearbeitungsvorrichtung, in der die an der Wertdokumentbearbeitungsvorrichtung gerade eingestellte Transportlage bzw. die Wertdokumentart hinterlegt ist. Auch die Informationen zur Position der bestimmten Sicherheitselemente des Wertdokuments in Abhängigkeit der Transportlage und/oder in Abhängigkeit der Wertdokumentart des Wertdokuments kann in dem Sensor selbst bereit gestellt sein, z.B. in einem Datenspeicher des Sensors hinterlegt, auf den die Auswerteeinrichtung zugreifen kann, oder der Auswerteeinrichtung von außerhalb des Sensors zugeführt werden, z.B. von einem anderen Sensor oder von einer anderen Einrichtung der Wertdokumentbearbeitungsvorrichtung.

In manchen Ausführungsbeispiele ist die Auswerteeinrichtung zum Auswerten des Wertdokumentbilds dazu eingerichtet, den lokalisierten Fasern des Wertdokumentbilds (allen oder einer Teilmenge der Fasern des Wertdokumentbilds oder jeder Faser des jeweiligen Teilbilds/des jeweiligen Umgebungsbereichs des jeweiligen Rasterpunkts) jeweils einen (flächigen) Wirkungsbereich zuzuordnen. Die jeweilige Faser liegt vorzugsweise im Inneren (z.B. Zentrum) des ihr zugeordneten Wirkungsbereichs. Zur Auswertung analysiert die Auswerteeinrichtung für die jeweiligen Orte des Wertdokumentbilds (z.B. für mehrere verschiedene Teilbilder bzw. Umgebungsbereiche von Rasterpunkten) jeweils lokal die Wirkungsbereiche der am jeweiligen Ort und ggf. in dessen Umgebung lokalisierten Fasern, z.B. die Wirkungsbereich der im jeweiligen Teilbilde bzw. im jeweiligen Umgebungsbereich des jeweiligen Rasterpunkts vorhandenen Fasern. Zum Beispiel werden die Wirkungsbereiche dabei lokal im Hinblick auf die von ihnen abgedeckte bzw. nicht-abgedeckte Fläche oder im Hinblicke auf eine Überlappung benachbarter Wirkungsbereiche analysiert. Die Auswerteeinrichtung ermittelt den jeweiligen lokalen Faser-Kennwert des jeweiligen Orts (z.B. Teilbilds bzw. Umgebungsbereichs) auf Basis der lokalen Analyse der (lokal vorhandenen) Wirkungsbereiche, die am jeweiligen Ort und ggf. in dessen Umgebung liegen.

Zum Beispiel wird der lokale Faser-Kennwert in Abhängigkeit vom Überlapp/der Verteilung der Wirkungsbereiche /der Position der Wirkungsbereiche / der Fläche der Wirkungsbereiche bestimmt.

Die Größe und/ oder Form der Wirkungsbereiche kann für jede der lokalisierten Fasern des Wertdokumentbilds gleich sein. Die Größe und/ oder Form kann aber auch regionsabhängig auf dem Wertdokument unterschiedlich sein. Zum Beispiel können die Wirkungsbereiche jeweils die Form eines Kreises, Ovals oder Rechtecks mit der jeweiligen Faser in der Mitte haben. Alternativ kann die Form und/ oder Größe auch in Abhängigkeit der Faser-Form gewählt werden, z.B. in Form eines schlauchartigen Gebildes um die jeweilige Faser herum. Die Wirkungsbereiche werden vorzugsweise so definiert, dass sie eine kleinere Fläche aufweisen als die Teilbilder bzw. Umgebungsbereiche. Dann können bestimmte lokale Faser-Kennwerte genauer bestimmt werden. Die Teilbilder bzw. Umgebungsbereiche können aber auch kleiner sein als die Wirkungsbereiche, z.B. im Fall von lokalen Faser-Kennwerten, die nur am jeweiligen Rasterpunkt bestimmt werden, z.B. der lokale Abstand des jeweiligen Rasterpunkts zur nächsten Faser, oder Zugehörigkeit des jeweiligen Rasterpunkts zu mindestens einem Wirkungsbereich einer Faser (ja/nein).

Insbesondere ist die Auswerteeinrichtung, zum Auswerten des Wertdokumentbilds dazu eingerichtet, die Größe der Wirkungsbereiche in Abhängigkeit eines Dichte-Erwartungswerts zu wählen, der die (ggf. lokal) erwartete Flächendichte der Fasern angibt, insbesondere umgekehrt proportional zum Dichte-Erwartungswert. Der Dichte-Erwartungswert kann an jedem Ort des Wertdokumentbilds gleich sein, wenn die Fasern gleichmäßig über das Wertdokument verteilt sind, oder nur für das jeweilige Teilbild bzw. Umgebungsbereich gelten. Bei gro-ßem Dichte-Erwartungswert werden also kleinere Wirkungsbereiche definiert als bei kleinem Dichte-Erwartungswert. Dadurch können auffällige Regionen des Wertdokumentbilds, in denen zu wenige oder zu viele Fasern liegen, mittels Analyse der Wirkungsbereiche auch bei unterschiedlichen Wertdokumentarten (mit verschiedenem Dichte-Erwartungswert), besser gefunden werden.

In einem Ausführungsbeispiel ist die Auswerteeinrichtung, zum Auswerten des Wertdokumentbilds dazu eingerichtet, für das gesamte Wertdokumentbild oder für eines oder mehrere Teilbilder jeweils bzw. für mindestens einen oder mehrere Umgebungsbereiche von Rasterpunkten jeweils
- Überdeckungsbereiche zu identifizieren die zum Wirkungsbereich mindestens einer der Fasern des Wertdokumentbilds bzw. des jeweiligen Teilbilds bzw. des jeweiligen Umgebungsbereichs gehören und/oder Freibereiche zu identifizieren, die zu keinem Wirkungsbereich mindestens einer der Fasern des Wertdokumentbilds bzw. des jeweiligen Teilbilds bzw. des jeweiligen Umgebungsbereichs gehören und/ oder Überlappungsbereiche zu identifizieren, in denen die Wirkungsbereiche mindestens zweier (benachbarter) Fasern des Wertdokumentbilds bzw. des jeweiligen Teilbilds bzw. des jeweiligen Umgebungsbereichs überlappen, und
- eine oder mehrere auffällige Regionen (z.B. Teilbild, Umgebungsbereich) des Wertdokumentbilds zu identifizieren, die im Hinblick auf ihre Überdeckungsbereiche/Freibereiche/Überlappungsbereiche (z.B. hinsichtlich deren Fläche/Flächenanteil) auffällig sind, und
- das Wertdokuments als fälschungsverdächtig zu klassifizieren in Abhängigkeit der Eigenschaften der Überdeckungsbereiche und/ oder der Freibereiche und/oder der Überlappungsbereiche in/an einem oder mehreren auffälligen Regionen des Wertdokumentbilds.

Die Eigenschaft/en, in Abhängigkeit derer das Wertdokument als fälschungsverdächtig klassifiziert wird, sind z.B. der Flächeninhalt und/ oder der Flächenanteil der Überdeckungsbereiche und/oder der Freibereiche und/oder der Überlappungsbereiche in/an einem oder mehreren auffälligen Regionen des Wertdokumentbilds und/oder die Form der auffälligen Region bzw. die Verteilung mehrerer auffälligen Regionen über das Wertdokumentbild und/ oder die Anzahl der in dem Wertdokumentbild gefundenen auffälligen Regionen. Eine Region/ ein Teilbild/ ein Umgebungsbereich kann auch in Abhängigkeit des Flächeninhalts des größten darin gefundenen Freibereichs und/ oder Überlappungsbereichs als auffällig eingestuft werden. Auffällig ist eine Region z.B. dann, wenn die Fläche oder der Flächenanteil der Überdeckungsbereiche/Freibereiche/Überlappungsbereiche in der jeweiligen auffälligen Region größer ist als erwartet. Dies kann durch Vergleichen mit einem vorbestimmten Referenzwert für die Fläche/ den Flächenanteil bestimmt werden oder durch Vergleichen mit anderen Regionen (Teilbildern, Umgebungsbereichen) oder mit dem mittleren Flächenanteil der Überdeckungsbereiche/Freibereiche/Überlappungsbereiche am gesamten Wertdokumentbild.

In einer Weiterbildung der Erfindung ist das von der Bilderfassungseinrichtung erfasste Wertdokumentbild ein erstes Wertdokumentbild, das von einer ersten Wertdokumentseite (Vorder-bzw. Rückseite) eines zu prüfenden Wertdokuments erfasst wird, und die Auswerteeinrichtung verfügt zusätzlich über ein zweites Wertdokumentbild, das von der der ersten Seite gegenüberliegenden zweiten Seite desselben zu prüfenden Wertdokuments (Rück- bzw. Vorderseite) erfasst wurde. Die Auswerteeinrichtung ist dann dazu eingerichtet, für mindestens ein erstes Teilbild des ersten Wertdokumentbilds und für mindestens ein zweites Teilbild des zweiten Wertdokumentbilds jeweils mindestens einen lokalen Faser-Kennwert zu bestimmen, wobei für das erste und zweite Teilbild vorzugsweise einander entsprechende lokale Faser-Kennwerte bestimmt werden, die miteinander vergleichbar sind. Beispielsweise sind der lokale Faser-Kennwert des ersten und zweiten Teilbilds jeweils für die lokale Dichte der Fasern im jeweiligen des ersten bzw. zweiten Teilbild charakteristisch oder für die lokale Verteilung der Fasern im jeweiligen ersten bzw. zweiten Teilbild oder für die Position einer oder mehrerer Fasern im jeweiligen ersten bzw. zweiten Teilbild oder für die lokalen Beschaffenheit der Fasern im jeweiligen ersten bzw. zweiten Teilbild. Das Wertdokument wird dann in Abhängigkeit des lokalen Faser-Kennwerts des mindestens einen ersten Teilbilds und in Abhängigkeit des lokalen Faser-Kennwerts des mindestens einen zweiten Teilbilds als fälschungsverdächtig klassifiziert, insbesondere im Hinblick auf das Vorliegen einer composed-Fälschung. Das erste und zweite Teilbild können im selben oder in verschiedenen Abschnitten des jeweiligen Wertdokuments positioniert sein.

Die lokalen Faser-Kennwerte des ersten und zweiten Teilbilds können voneinander getrennt geprüft werden (z.B. mit jeweils einem Erwartungswert verglichen werden) oder sie können miteinander kombiniert oder miteinander verglichen werden. Beim Kombinieren wird z.B. der Mittelwert der Faser-Dichte des ersten und (ggf. dazu korrespondierenden) zweiten Teilbilds bestimmt oder die Faseranzahl des ersten und zweiten Teilbilds werden miteinander addiert, und das Wertdokument in Abhängigkeit der mittleren Faser-Dichte bzw. in Abhängigkeit der Summe an Fasern im ersten und (ggf. dazu korrespondierenden) zweiten Teilbild als fälschungsverdächtig klassifiziert. Die Auswerteeinrichtung kann die lokalen Faser-Kennwerte des ersten und des (ggf. dazu korrespondierenden) zweiten Teilbilds auch miteinander vergleichen (z.B. die Dichte oder den mittleren Faserabstand) und das Wertdokument in Abhängigkeit von dem Vergleichsergebnis als fälschungsverdächtig klassifizieren, z.B. bei Abweichungen voneinander, die größer sind als eine akzeptable Schwankungsbreite. Dadurch können Fälschungen entdeckt werden, die nur einseitig mit Fasern versehen sind.

Die Wahl der Teilbilder bzw. die Fläche der möglichen Teilbilder einer Wertdokumentseite kann durch andere Sicherheitselemente oder dunkle Druckbereiche des Wertdokuments eingeschränkt sein. Durch die Auswertung sowohl von mindestens einem Teilbild der Vorderseite und als auch von mindestens einem Teilbild der Rückseite wird eine größere Wertdokumentfläche geprüft als im Fall einer nur einseitigen Prüfung des Wertdokuments und die Prüfung dadurch zuverlässiger. Durch die Auswertung von Teilbildern der Vorder- und Rückseite wird daher erreicht, dass auch solche Wertdokumente zuverlässig geprüft werden können, für die nur kleine Teilbilder möglich sind oder die relativ wenige Fasern aufweisen.

In einer besonders vorteilhaften Variante der beidseitigen Auswertung ist die Auswerteeinrichtung dazu eingerichtet, zu dem mindestens einen ersten Teilbild des ersten Wertdokumentbilds ein korrespondierendes zweites Teilbild des zweiten Wertdokumentbilds zu bestimmen, das ein Ausschnitt des zweiten Wertdokumentbilds ist, wobei das erste Teilbild und das korrespondierende zweite Teilbild die optischen oder magnetischen Signale der Vorder- und Rückseite desselben Wertdokumentabschnitts desselben Wertdokuments enthalten. Die Auswerteeinrichtung ist z.B. dazu eingerichtet, zu den Bildpunkten des ersten Wertdokumentbilds die korrespondierenden Bildpunkte des zweiten Wertdokumentbilds zu bestimmen. Um das zu dem ersten Teilbild (z.B. der Vorderseite) korrespondierende zweite Teilbild (z.B. der Rückseite) zu finden, kann eine Spiegelung des ersten oder zweiten Teilbilds (Vorder- oder Rückseitenbilds) und ggf. eine leichte Drehung und/ oder Verschiebung der Bilder relativ zueinander erforderlich sein.

Die Auswerteeinrichtung ist außerdem dazu eingerichtet, für eines oder mehrere Paare aus erstem und dazu korrespondierendem zweiten Teilbild jeweils mindestens einen lokalen Faser-Kennwert zu bestimmen, wobei für das erste und zweite Teilbild vorzugsweise einander entsprechende lokale Faser-Kennwerte bestimmt werden, die miteinander vergleichbar sind und das Wertdokument in Abhängigkeit der lokalen Faser-Kennwerte des ersten und des zum ersten Teilbild korrespondierenden zweiten Teilbilds als fälschungsverdächtig zu klassifizieren, z.B. im Hinblick auf das Vorliegen einer composed-Fälschung. Die lokalen Faser-Kennwerte des ersten und dazu korrespondierenden zweiten Teilbilds können voneinander getrennt geprüft werden oder sie können miteinander kombiniert oder miteinander verglichen werden (Beispiele siehe oben).

Durch die Auswertung der zueinander korrespondierenden Teilbilder desselben Wertdokumentabschnitts der Vorder- und Rückseite wird eine noch genauere Wertdokumentprüfung erreicht. Da die beiden korrespondierenden Teilbilder ja denselben Wertdokumentabschnitt (z.B. Vorder- und Rückseite desselben Stück Papiers) zeigen, bringt diese beidseitige Auswertung daher keine bloße Vergrö-ßerung der geprüften Fläche, sondern ist - wegen der räumliche Übereinstimmung der Teilbilder auf dem Wertdokument - aussagekräftiger als zwei beliebige Teilbilder desselben Wertdokuments gemeinsam auszuwerten. Denn für zwei beliebige Teilbilder desselben Wertdokuments ist bei einer composed-Fälschung zu erwarten, dass sie nicht beide im gefälschten Abschnitt oder beide im echten Abschnitt liegen, sondern in vielen Fällen eines der Teilbilder im gefälschten und eines im echten Abschnitt der composed-Fälschung liegt. Ein kombinierter lokaler Faser-Kennwert (z.B. Mittelwert) solcher Teilbilder würde daher näher am Erwartungswert des echten Wertdokuments liegen als im Fall miteinander korrespondierender Teilbilder.

Wenn aber die beiden korrespondierenden Teilbilder der Vorder- und Rückseite ausgewertet werden, die genau denselben Wertdokumentabschnitt enthalten, ist es sicher, dass, sofern eines dieser Teilbilder (z.B. das Vorderseiten-Teilbild) im gefälschten Abschnitt einer composed-Fälschung liegt, dass dann auch das dazu korrespondierende andere Teilbild (das Rückseiten-Teilbild) im gefälschten Abschnitt dieser composed-Fälschung liegt. Die beiden korrespondierenden Teilbilder liegen daher mit größerer Wahrscheinlichkeit beide im gefälschten Teil einer composed-Fälschung. Ein kombinierter lokaler Faser-Kennwerte der beiden korrespondierenden wird dann deutlich vom Erwartungswert abweichen. Im Ergebnis wird durch die beidseitige Auswertung desselben Wertdokumentabschnitts eine stark verbesserte Trennschärfe für die Erkennung von Fälschungen erreicht.

Das jeweilige Paar aus erstem und korrespondierendem zweiten Teilbild kann in Abhängigkeit der beiden lokalen Faser-Kennwerte als verdächtig eingestuft werden und das Wertdokument in Abhängigkeit der als fälschungsverdächtig eingestuften Paare aus erstem und korrespondierendem zweiten Teilbild des jeweiligen Wertdokuments als fälschungsverdächtig klassifiziert werden, insbesondere in Abhängigkeit der Anzahl an als fälschungsverdächtig eingestuften Paaren aus erstem und korrespondierendem zweiten Teilbild des jeweiligen Wertdokuments, z.B. falls die Anzahl solcher Paare beim selben Wertdokument mindestens 1 oder 2 beträgt.

Das zweite Wertdokumentbild kann mit Hilfe derselben Bilderfassungseinrichtung erfasst werden, wobei das erste und zweite Wertdokumentbild z.B. nacheinander erfasst werden, wenn das Wertdokument in umgedrehter Transportlage nochmal an dem optischen Sensor vorbeitransportiert wird. Alternativ kann das zweite Wertdokumentbild auch mit Hilfe einer anderen Bilderfassungseinrichtung erfasst werden (ggf. gleichzeitig mit dem ersten Wertdokumentbild), die z.B. auf der gegenüber liegenden Seite zu o.g. Bilderfassungseinrichtung angeordnet ist.

In einer Weiterbildung der Erfindung ist die Auswerteeinrichtung dazu eingerichtet, für einen oder mehrere Orte des Wertdokumentbilds (Teilbilder bzw. der Rasterpunkte oder deren Umgebungsbereiche) jeweils den lokalen Faser-Kennwert mit einem (faserbezogenen) Erwartungswert E zu vergleichen. In Abhängigkeit des für einen oder mehrere Orte des Wertdokumentbilds erhaltenen Ergebnisses dieses Vergleichens wird das Wertdokument dann von der Auswerteeinrichtung als fälschungsverdächtig klassifiziert. Beispielsweise ist die Auswerteeinrichtung dazu eingerichtet, das Wertdokument in Abhängigkeit eines Unterschieds, der sich bei dem Vergleichen zwischen dem jeweiligen lokalen Faser-Kennwert des jeweiligen Orts und dem für den jeweiligen Ort bestimmten Erwartungswert ergibt, als fälschungsverdächtig zu klassifizieren. Der Erwartungswert kann für verschiedene Orte (Teilbilder bzw. der Rasterpunkte oder deren Umgebungsbereiche) des Wertdokumentbilds unterschiedlich sein.

Zum Beispiel bestimmt die Auswerteeinrichtung diejenigen Orte (z.B. Teilbilder bzw. Rasterpunkte oder deren Umgebungsbereiche), deren lokaler Faser-Kennwert von dem jeweiligen Erwartungswert (z.B. um mehr als eine akzeptable Schwankungsbreite) abweicht. Die akzeptable Schwankungsbreite beträgt vorzugsweise mindestens 20%, besonders bevorzugt mindestens 40%, des jeweiligen Erwartungswerts. Und das Wertdokument wird als fälschungsverdächtig klassifiziert in Abhängigkeit der Anzahl und/ oder Position und/ oder Verteilung der Orte auf dem Wertdokumentbild (Teilbilder bzw. Rasterpunkte oder deren Umgebungsbereiche), deren lokalen Faser-Kennwert von dem Erwartungswert (um mehr als die akzeptable Schwankungsbreite) abweicht. Insbesondere kann eine räumlichen Anordnung der von dem Erwartungswert abweichenden Orte (Teilbilder bzw. Rasterpunkte oder deren Umgebungsbereiche) mit einer für das jeweilige Wertdokument bekannten Soll-Anordnung verglichen werden, und das Wertdokument als fälschungsverdächtig klassifiziert werden in Abhängigkeit des Vergleichs der räumlichen Anordnung der von dem Erwartungswert abweichenden Orte mit der Soll-Anordnung.

Als Erwartungswert kann z.B. der Erwartungswert für die Anzahl an Fasern verwendet werden, der angibt, wie viele Fasern für den jeweiligen Ort zu erwarten sind, falls es sich bei dem zu prüfenden Wertdokument um ein echtes Wertdokument der jeweiligen Wertdokumentart handelt., oder der Dichte-Erwartungswert, der gibt die in dem jeweiligen Teilbild zu erwartende Faserdichte angibt. Der Erwartungswert kann eine natürliche Zahl, eine positive reelle Zahl oder Null sein. Für Fasern verschiedener Beschaffenheit, z.B. Fasern verschiedener Farben, können verschiedene Erwartungswerte verwendet werden.

Sofern der Erwartungswert für die Faseranzahl oder Faserdichte größer als Null ist, kann - alternativ zu einer quantitativen Bestimmung des Unterschieds zum Erwartungswert - auch nur geprüft werden, ob die Anzahl an Fasern bzw. die Faserdichte in dem jeweiligen Teilbild gleich Null ist (oder größer als Null ist). Denn zur Feststellung eines Fälschungsverdachts kann es ausreichen, dass die Anzahl an Fasern bzw. die Faserdichte gleich Null ist, obwohl der Erwartungswert dafür größer Null ist. Dabei kommt es nicht darauf an, wie groß der Unterschied zum jeweiligen Erwartungswert ist. Beispielsweise kann die Auswerteeinrichtung zur Prüfung eines Wertdokuments, dessen Fasern über das (gesamte) Wertdokument (ungleichmäßig oder im Wesentlichen gleichmäßig) verteilt sind (d.h. bei dem der Erwartungswert für die Faseranzahl oder Faserdichte überall größer als Null ist), dazu eingerichtet sein, das jeweilige Wertdokument als fälschungsverdächtig zu klassifizieren, falls die Anzahl an Fasern für eine mindestens eine Mindestzahl von Teilbildern Null beträgt, wobei die Mindestzahl > 0 ist.

Der Erwartungswert kann für das jeweiligen Wertdokument bzw. für den jeweiligen Ort vordefiniert sein, z.B. bereits vor der Wertdokumentprüfung festgelegt worden sein, insbesondere in Abhängigkeit der Wertdokumentart, wobei für verschiedene Wertdokumentarten im Allgemeinen verschiedene Erwartungswerte vordefiniert bzw. festgelegt sind. Alternativ kann der Erwartungswert erst bei der Wertdokumentprüfung ermittelt werden, z.B. auf Basis der lokalen Faser-Kennwerte, die für mehrere Orte des jeweiligen Wertdokumentbilds bestimmt wurden. Im Fall eines vordefinierten Erwartungswerts kann dieser in der Auswerteeinrichtung des Sensors, z.B. in einem Datenspeicher der Auswerteeinrichtung, hinterlegt sein. Der vordefinierte Erwartungswert kann aber auch außerhalb, z.B. in der Wertdokumentbearbeitungsvorrichtung, hinterlegt sein und von dort an die Auswerteeinrichtung übermittelt werden.

Alternativ oder zusätzlich zur Prüfung anhand eines vordefinierten Erwartungswerts kann die Auswerteeinrichtung auch dazu eingerichtet sein, den Erwartungswert, mit dem der lokalen Faser-Kennwert zumindest eines Orts (Teilbild bzw. Rasterpunkt oder dessen Umgebungsbereich) verglichen wird, auf Basis der lokale Faser-Kennwerte zu bestimmen, die für einen oder mehrere andere Orte (Teilbilder bzw. Rasterpunkte oder deren Umgebungsbereiche) desselben Wertdokumentbilds gefunden werden. Es kann also eine relative Prüfung der lokalen Faser-Kennwerte mindestens zweier verschiedener Orte (Teilbilder bzw. Rasterpunkte oder deren Umgebungsbereiche) desselben Wertdokumentbilds durchgeführt werden. Dies ist insbesondere vorteilhaft zur Prüfung eines Wertdokuments, dessen Fasern über das (gesamte) Wertdokument im Wesentlichen gleichmäßig verteilt sind. Denn dann brauchen keine einzelnen vordefinierten Erwartungswerte hinterlegt zu werden, etwa für neu erschienene Wertdokumente. Zum Beispiel kann als Erwartungswert der durchschnittliche lokale Faser-Kennwert mehrerer anderer Orte desselben Wertdokumentbilds verwendet werden.

Insbesondere kann die Auswerteeinrichtung dazu eingerichtet sein, eine relative Auswertung der Teilbilder desselben Wertdokuments bezüglich der in den Teilbildern bestimmten lokalen Faser-Kennwerte durchzuführen. Dabei kann der lokalen Faser-Kennwert eines Teilbilds mit dem lokalen Faser-Kennwert eines oder mehrerer anderer Teilbilder desselben Wertdokuments verglichen werden und das Wertdokument als fälschungsverdächtig klassifiziert werden in Abhängigkeit des Ergebnisses des Vergleichs, z.B. bei starker Abweichung der lokalen Faser-Kennwerte verschiedener Teilbilder desselben Wertdokuments voneinander. Zum Beispiel kann die Auswerteeinrichtung dazu eingerichtet sein, den Erwartungswert, mit dem der lokale Faser-Kennwert zumindest eines der Teilbilder verglichen wird, auf Basis des lokalen Faser-Kennwerts zu berechnen, die an/in einem oder mehreren anderen Orten/Teilbildern desselben Wertdokuments gefunden werden. Zum Beispiel kann die Auswerteeinrichtung anhand eines oder mehrerer der Teilbilder desselben Wertdokuments eine mittlere Flächendichte an Fasern für dieses Wertdokument bestimmen und diese als Dichte-Erwartungswert verwenden. Beispielsweise kann auch das Verhältnis der für verschiedene Orte/ Teilbilder bestimmten lokalen Faser-Kennwerte gebildet werden und die Banknote in Abhängigkeit dieses Verhältnisses als fälschungsverdächtig klassifiziert werden.

Die Auswerteeinrichtung kann eine schrittweise Einstufung der einzelnen zu untersuchenden Orte (Teilbilder bzw. Rasterpunkte oder deren Umgebungsbereiche) eines Wertdokuments als fälschungsverdächtig oder nicht-fälschungsverdächtig durchführen. Zum Beispiel kann die Auswerteeinrichtung zum Auswerten des Wertdokumentbilds dazu eingerichtet sein, den jeweiligen Ort in Abhängigkeit des für diesen Orten geltenden Faser-Kennwerts als verdächtig einzustufen, z.B. falls er sich vom Erwartungswert signifikant unterscheidet, z.B. um mehr als ein Schwellenwert. Andernfalls wird der jeweilige Ort als nicht-verdächtig eingestuft. Das jeweilige Wertdokument wird von der Auswerteeinrichtung dann in Abhängigkeit der Anzahl der bei dem jeweiligen Wertdokument als verdächtig eingestuften Orte als fälschungsverdächtig klassifiziert (oder als nicht-fälschungsverdächtig). Insbesondere kann die Auswerteeinrichtung zum Auswerten des Wertdokumentbilds dazu eingerichtet sein, das jeweilige Wertdokument als fälschungsverdächtig zu klassifizieren, falls die Anzahl V der bei dem jeweiligen Wertdokument als verdächtig eingestuften Orte (Teilbilder bzw. Rasterpunkte oder deren Umgebungsbereiche) eine Mindestzahl P erreicht oder überschreitet, d.h. falls V≥P, wobei die Mindestzahl P>0 ist und vorzugsweise 1 oder 2 beträgt, d.h. bei mindestens einem oder bei mindestens zwei als verdächtig eingestuften Orten wird das Wertdokument als fälschungsverdächtig klassifiziert.

Die akzeptable Schwankungsbreite S kann aus dem Erwartungswert E bestimmt werden, z.B. proportional zu diesem vorgegeben sein. Zur Bestimmung einer akzeptablen Schwankungsbreite S kann aber auch vor der Wertdokumentprüfung - für eine Vielzahl (z.B. 100) echter Wertdokumente der jeweiligen Wertdokumentart - der lokalen Faser-Kennwert für mindestens einen fest vorgegebenen Ort des jeweiligen Wertdokuments bestimmt werden. Durch Mittelung dieser lokalen Faser-Kennwerte der Vielzahl von Wertdokumenten kann ein mittlerer lokaler Faser-Kennwert für die jeweilige Wertdokumentart und ggf. für den jeweiligen Ort bestimmt werden, der dann als Erwartungswert bei der Prüfung der Wertdokumente dieser Wertdokumentart verwendet wird. Die in der Vielzahl enthaltenen echten Wertdokumente müssen nicht derselben Stückelung angehören, sondern lediglich nominell die gleiche Faserverteilung aufweisen, z.B. aus dem gleichen Fasern-enthaltenden Substrat hergestellt sein. Aus den für die Vielzahl echter Wertdokumente der jeweiligen Wertdokumentart jeweils bestimmten lokalen Faser-Kennwerten kann zusätzlich oder alternativ auch die Standardabweichung s des lokalen Faser-Kennwerts der jeweiligen Wertdokumentart und ggf. des jeweiligen Orts bestimmt werden. Die akzeptable Schwankungsbreite S für die jeweilige Wertdokumentart kann dann in Abhängigkeit der Standardabweichung s des lokalen Faser-Kennwerts gewählt werden. Insbesondere kann für die akzeptable Schwankungsbreite ein Wert festgelegt werden, der mindestens das Doppelte, vorzugsweise mindestens das Vierfache der Standardabweichung s beträgt.

In einer Weiterbildung der Erfindung ist in dem Sensor für eine oder mehrere Wertdokumentarten jeweils der Erwartungswert an dem jeweiligen Ort des Wertdokumentbilds (z.B. Teilbild bzw. Rasterpunkt oder dessen Umgebungsbereich) bereit gestellt. Und die Auswerteeinrichtung verfügt über eine Information über die Wertdokumentart des jeweils zu prüfenden Wertdokuments. Die Auswerteeinrichtung kann dazu eingerichtet sein - anhand der Wertdokumentart des jeweils zu prüfenden Wertdokuments und unter Verwendung des für eine oder mehrere Wertdokumentarten bereit gestellten Erwartungswerts für den lokalen Faser-Kennwert an dem jeweiligen Ort - den Erwartungswert für den lokalen Faser-Kennwert an dem jeweiligen Ort des jeweils zu prüfenden Wertdokuments zu bestimmen., der für die Wertdokumentart des zu prüfenden Wertdokuments am jeweilige Ort erwartet wird. Die Information über die Wertdokumentart des zu prüfenden Wertdokuments kann in dem Sensor selbst bereit gestellt sein, z.B. in einem Datenspeicher des Sensors hinterlegt, auf den die Auswerteeinrichtung zugreifen kann, oder sie kann der Auswerteeinrichtung von außerhalb des Sensors zugeführt werden, z.B. von einem anderen Sensor oder von der Wertdokumentbearbeitungsvorrichtung. Die Information über die Wertdokumentart des zu prüfenden Wertdokuments kann für mehrere hintereinander zu prüfende Wertdokument gleich sein, z.B. falls ein Stapel von Wertdokumenten derselben Wertdokumentart geprüft wird. Die Information über die Wertdokumentart kann aber auch von einem zu prüfenden Wertdokument zum nächsten variieren und dem erfindungsgemäßen Sensor von dem anderen Sensor, der die Wertdokumentart bestimmt, für jedes der Wertdokumente individuell, also dynamisch übermittelt werden.

Wenn die Auswerteeinrichtung über eine Information über die Wertdokumentart des zu prüfenden Wertdokuments verfügt, kann sie die Orte (Teilbilder bzw. Rasterpunkte oder deren Umgebungsbereiche) des Wertdokumentbilds, für die der jeweilige lokale Faser-Kennwert bestimmt wird, in Abhängigkeit der Wertdokumentart des zu prüfenden Wertdokuments bestimmen. Zum Beispiel können die Orte in Abhängigkeit der Wertdokumentart gezielt in einem unbedruckten oder in schwach bedruckten Bereichen des Wertdokuments bestimmt werden. Insbesondere sind in der Auswerteeinrichtung mehrere Orte fest vordefiniert und die Auswerteeinrichtung bestimmt von diesen fest vorgegebenen Orten in Abhängigkeit der Wertdokumentart des zu prüfenden Wertdokuments bestimmte Orte zum Auswerten. Die Orte können z.B. so gewählt werden, dass der unbedruckte/schwach bedruckte Bereich des jeweiligen Wertdokuments möglichst großflächig ausgenutzt wird. Das Wertdokument wird dann nur in Abhängigkeit der lokalen Faser-Kennwerte dieser Orte als fälschungsverdächtig klassifiziert, während andere, nicht zum Auswerten bestimmte Orte unberücksichtigt bleiben. Insbesondere kann die Position und/oder der Flächeninhalt und/oder die Form der Teilbilder in Abhängigkeit der Wertdokumentart des zu prüfenden Wertdokuments gewählt werden. Die Lage und/oder Form und/oder der Flächeninhalt der Teilbilder kann auch für mehrere Wertdokumentarten gleich sein, z.B. für mehrere Stückelungen derselben Währung.

Zur Bestimmung der Position der auszuwertenden Orte auf dem Wertdokumentbild kann eine dynamische Information über die Transportlage des jeweiligen Wertdokuments verwendet werden, z.B. um gezielt den unbedruckten oder schwach bedruckten Bereich des Wertdokument zu finden. Wenn die Transportlage der Wertdokumente jedoch fest vorgegeben ist (wie es bei manchen Wertdokumentbearbeitungsvorrichtungen der Fall ist), ist die Position des unbedruckten oder schwach bedruckten Bereichs vorbekannt und es wird keine dynamische Information über die Transportlage des jeweiligen Wertdokuments benötigt, um die Position der Orte zu bestimmen.

Insbesondere zur Prüfung von Wertdokumenten, deren Fasern über das (gesamte) Wertdokument im Wesentlichen gleichmäßig verteilt sind, kann der Sensor jeweils über eine Information über die mittlere Anzahl oder mittlere Flächendichte an Fasern für eine oder mehrere Wertdokumentarten verfügen. Diese Information kann sich für verschiedene Wertdokumentarten unterscheiden. Und die Auswerteeinrichtung kann dazu eingerichtet sein, auf Basis der Information über die Wertdokumentart des zu prüfenden Wertdokuments die mittlere Anzahl oder mittlere Flächendichte an Fasern für das jeweils zu prüfende Wertdokument zu bestimmen bzw. herauszusuchen und den Flächeninhalt der Teilbilder des zu prüfenden Wertdokuments in Abhängigkeit der mittleren Anzahl bzw. in Abhängigkeit der mittleren Flächendichte an Fasern festzulegen. Zum Beispiel können der Flächeninhalt die mittlere Anzahl oder mittlere Flächendichte an Fasern so groß bestimmt werden, dass eine Mindestzahl an Fasern im jeweiligen Teilbild erwartet werden. Bei großer Flächendichte sind Teilbilder mit relativ kleinem Flächeninhalt ausreichend, bei geringer Flächendichte dagegen Teilbilder mit relativ großem Flächeninhalt notwendig. Die Information über die mittlere Anzahl an Fasern bzw. mittlere Flächendichte der Fasern auf dem Wertdokument, über die die Auswerteeinrichtung verfügt, kann im Sensor bzw. in der Auswerteeinrichtung selbst bereit gestellt sein oder von der Wertdokumentbearbeitungsvorrichtung dorthin übermittelt werden.

In einer Weiterbildung der Erfindung ist der Sensor dazu eingerichtet, individuelle Fingerabdruckdaten des jeweiligen Wertdokuments, wie sie für eine Rückverfolgung von Wertdokumenten verwendbar sind, aufzunehmen und ggf. auch für die Rückverfolgung von Wertdokumenten selbst eingesetzt zu werden. Eine Rückverfolgung von Wertdokumenten, insbesondere von gefälschten oder fälschungsverdächtigen Wertdokumenten, wird beispielsweise durchgeführt, um Bearbeitungsinformationen des jeweiligen Wertdokuments zu ermitteln, die einen Hinweis auf den Ursprung bzw. den Einzahler des jeweiligen (z.B. gefälschten oder fälschungsverdächtigen) Wertdokuments geben können.

Der Sensor, insbesondere die Auswerteeinrichtung des Sensors, kann dazu eingerichtet sein, individuelle Fingerabdruckdaten des jeweiligen Wertdokuments anhand von einer oder mehrerer Eigenschaften der in dem Wertdokumentbild lokalisierten Fasern (z.B. betreffend deren Position/ en, Abstand/ Abstände, Form/ en oder Größe/n oder Farbe/n oder Helligkeit/en) und/ oder anhand eines oder mehrerer der lokalen Faser-Kennwerte des jeweiligen Wertdokuments, die sie für den oder die verschiedenen Orte des Wertdokumentbilds (und ggf. deren jeweilige Umgebung) ermittelt hat, zu bestimmen. Diese individuellen Fingerabdruckdaten sind für das jeweilige Wertdokument einzigartig und für verschiedene Wertdokumente gleicher Wertdokumentart im Allgemeinen unterschiedlich. Der Sensor, z.B. seine Auswerteeinrichtung oder eine andere Einrichtung des Sensors, kann dazu eingerichtet sein, die individuellen Fingerabdruckdaten des jeweiligen Wertdokuments zu Bearbeitungsdaten des jeweiligen Wertdokuments (z.B. betreffend die Herkunft des Wertdokuments und/ oder die Denomination des Wertdokuments und/ oder den Zeitpunkt und ggf. den Ort der von dem Sensor durchgeführten Wertdokumentprüfung) zuzuordnen und zusammen mit den Bearbeitungsdaten des jeweiligen Wertdokuments, z.B. in einer Liste für mehrere Wertdokumente, jeweils einander zugeordnet abzuspeichern und ggf. auszugeben. Die Bearbeitungsdaten des jeweiligen Wertdokuments können von dem Sensor zumindest teilweise selbst ermittelt oder dem Sensor von außerhalb zur Verfügung gestellt worden sein.

Die individuellen Fingerabdruckdaten des jeweiligen Wertdokuments betreffen z.B. die Anzahl und/oder die Positionen und/oder die Farbort/e und/oder die Größe/ n und/ oder die lokalen Dichten und/ oder die Fluoreszenz- bzw. Phosphoreszenz-Eigenschaften der Fasern, des Wertdokumentbilds insgesamt oder des/der jeweiligen Orts/e des Wertdokumentbilds und ggf. dessen/deren jeweilige Umgebung, z.B. eines oder mehrere Teilbilder des Wertdokumentbilds bzw. eines oder mehrerer Rasterpunkte mit Umgebungsbereich. Die individuellen Fingerabdruckdaten können beispielsweise einen Vektor umfassen, dessen Koordinaten durch die Positionen aller Fasern des Wertdokumentbilds gebildet sind. Alternativ können die individuellen Fingerabdruckdaten auch einen Vektor umfassen, dessen verschiedene Koordinaten durch die lokalen Faser-Kennwerte, z.B. die lokalen Faserdichten, der verschiedenen Orte und ggf. deren Umgebung auf dem Wertdokumentbild gegeben sind (z.B. der Teilbilder bzw. der Rasterpunkte mit Umgebungsbereich). Die verschiedenen Koordinaten des Vektors können aber durch auch verschiedenartige lokale Faser-Kennwerte eines oder mehrerer Orte gebildet werden. An Stelle eines Vektors können als individuelle Fingerabdruckdaten aber auch nur ein einzelner lokaler Faser-Kennwert oder ein einzelner Zahlenwert für die jeweilige Eigenschaft der Fasern, z.B. der Mittelwert der jeweiligen Eigenschaft (z.B. Farbort, Größe, Abstände) aller in dem Wertdokumentbild lokalisierten Fasern, verwendet werden.

Um selbst für eine Rückverfolgung eingesetzt werden zu können, kann der Sensor einen (vom normalen Prüfmodus verschiedenen) Betriebsmodus zur Rückverfolgung von (echten, gefälschten oder fälschungsverdächtigen) Wertdokumenten aufweisen, bei dem die Auswerteeinrichtung dazu eingerichtet ist, die individuellen Fingerabdruckdaten eines zur Rückverfolgung bestimmten Wertdokuments, von dem der Sensor ein Wertdokumentbild aufnimmt, zu ermitteln, etwa anhand der Eigenschaften der in dem Wertdokumentbild des zur Rückverfolgung bestimmten Wertdokuments lokalisierten Fasern und/oder anhand eines oder mehrerer lokaler Faser-Kennwerte des zur Rückverfolgung bestimmten Wertdokuments. Dem Sensor steht für die Rückverfolgung eine Liste zur Verfügung, in der mehreren individuellen Fingerabdruckdaten von (gefälschten/fälschungsverdächtigen) Wertdokumenten jeweils Bearbeitungsinformationen, z.B. über die Herkunft des jeweiligen Wertdokuments und/ oder über die Denomination und/ oder über den Zeitpunkt und ggf. den Ort der Wertdokumentprüfung zugeordnet sind. Die Liste kann er zumindest teilweise selbst erzeugt haben oder sie kann ihm von außen zugeführt worden sein. Anhand der individuellen Fingerabdruckdaten des zur Rückverfolgung bestimmten Wertdokuments kann der Sensor, insbesondere durch Nachschlagen in der Liste, Bearbeitungsdaten des zur Rückverfolgung bestimmten Wertdokuments, insbesondere über die Herkunft/ die Denomination/ den Zeitpunkt/ den Ort der Wertdokumentprüfung des zur Rückverfolgung bestimmten Wertdokuments, ermitteln und als Ergebnis der Rückverfolgung ausgeben.

Die Erfindung betrifft auch eine Wertdokumentbearbeitungsvorrichtung mit dem beschriebenen Sensor und einer Transporteinrichtung, die das jeweilige Wertdokument in den Erfassungsbereich des Sensors einbringt. Alternativ kann das Wertdokument aber auch manuell in den Erfassungsbereich des Sensors eingebracht werden.

Die Erfindung betrifft auch ein den obigen Ausführungen entsprechendes Verfahren zur Prüfung eines Wertdokuments, insbesondere mit Hilfe des beschriebenen Sensors, wobei das Wertdokument eine Vielzahl von Fasern aufweist, die über das Wertdokument verteilt sind. Bei dem Verfahren wird ein Wertdokument in den Erfassungsbereich eines Sensors eingebracht und ein Wertdokumentbild des Wertdokuments mit Hilfe einer Bilderfassungseinrichtung des Sensors erfasst, wobei in dem Wertdokumentbild ein charakteristisches optisches oder magnetisches Signal der Fasern enthalten ist. Zum Auswerten des Wertdokumentbilds ist eine Auswerteeinrichtung des Sensors dazu eingerichtet, die Fasern zu lokalisieren, die in dem jeweiligen Wertdokumentbild enthalten sind, und für einen oder mehrere verschiedene Orte des Wertdokumentbilds jeweils mindestens einen lokalen Faser-Kennwert zu ermitteln, der für den jeweiligen Ort und ggf. für eine Umgebung des jeweiligen Orts auf dem Wertdokumentbild gilt. Die Auswerteeinrichtung ist außerdem dazu eingerichtet, das Wertdokument in Abhängigkeit des/ der lokalen Faser-Kennwerts/ e als fälschungsverdächtig zu klassifizieren, die für den Ort/ die verschiedenen Orte des Wertdokumentbilds ermittelt werden.

Zur Prüfung eines Wertdokuments, welches lumineszierende Fasern aufweist, die über das Wertdokument verteilt sind, wird das Wertdokument in den Erfassungsbereich des optischen Sensors eingebracht und wird dort mit dem von einer Beleuchtungseinrichtung des Sensors emittierten Anregungslicht beleuchtet, um die lumineszierenden Fasern des Wertdokuments optisch anzuregen oder wird dort entsprechend elektrisch angeregt. Mit Hilfe der Bilderfassungseinrichtung des Sensors wird dann ein Lumineszenzbild des Wertdokuments erfasst, wobei in dem Lumineszenzbild die Lumineszenz der lumineszierenden Fasern enthalten ist. Die Auswerteeinrichtung des optischen Sensors führt dann die oben erwähnte Auswertung des Lumineszenzbilds durch.

Nachfolgend wird die Erfindung anhand von Figuren beispielhaft beschrieben. Es zeigen:
- Fig. 1: Schematische Skizze zum Aufbau einer Wertdokumentbearbeitungsvorrichtung mit einem optischen Sensor zur Prüfung der Wertdokumente,
- Fig. 2a-c: Faserverteilung und mögliches Teilbild bei einer echten Banknote (Fig. 2a,b) und einer zugehörigen Fälschung (Fig. 2c),
- Fig. 3a-c: Faserverteilung und Raster vordefinierter Teilbilder bei einer echten Banknote (Fig. 3a, 3d) und bei einer zugehörigen Fälschung (Fig. 3b, 3c, 3e, 3f),
- Fig. 4a-c: Faserverteilung und Raster vordefinierter Teilbilder bei einer echten Banknote (Fig. 4a, 4c) und bei einer zugehörigen Fälschung (Fig. 4b, 4d),
- Fig. 5a-b: Faserverteilung und zueinander korrespondierende Teilbilder beider gegenüberliegender Seiten einer echten Banknote
- Fig. 6a-c: Lumineszenzbild, das in einem Raster von Rasterpunkten systematisch abgerastert wird (Fig. 6a), bei dem jeder lokalisierten Faser ein Wirkungsbereich zugeordnet ist (Fig. 6b), bei dem ein Umgebungsbereich um jeden Rasterpunkt definiert ist (Fig. 6c).

In den Ausführungsbeispielen wird als zu prüfendes Wertdokument eine Banknote mit lumineszierenden (z.B. fluoreszierenden oder phosphoreszierenden) Fasern betrachtet und ein optischer Sensor, der ein Lumineszenzbild der Banknote aufnimmt und ausgewertet. Die Erfindung betrifft aber genauso die Prüfung von Banknoten mit remittierenden oder magnetischen Fasern oder die Prüfung von anderen Wertdokumenten, die lumineszierende, remittierende oder magnetische Fasern aufweisen, wobei zur Prüfung im Hinblick auf magnetische Fasern ein Magnetsensor verwendet wird, der entsprechend ein Magnetsignal-Bild des Wertdokuments aufnimmt und entsprechend auswertet.

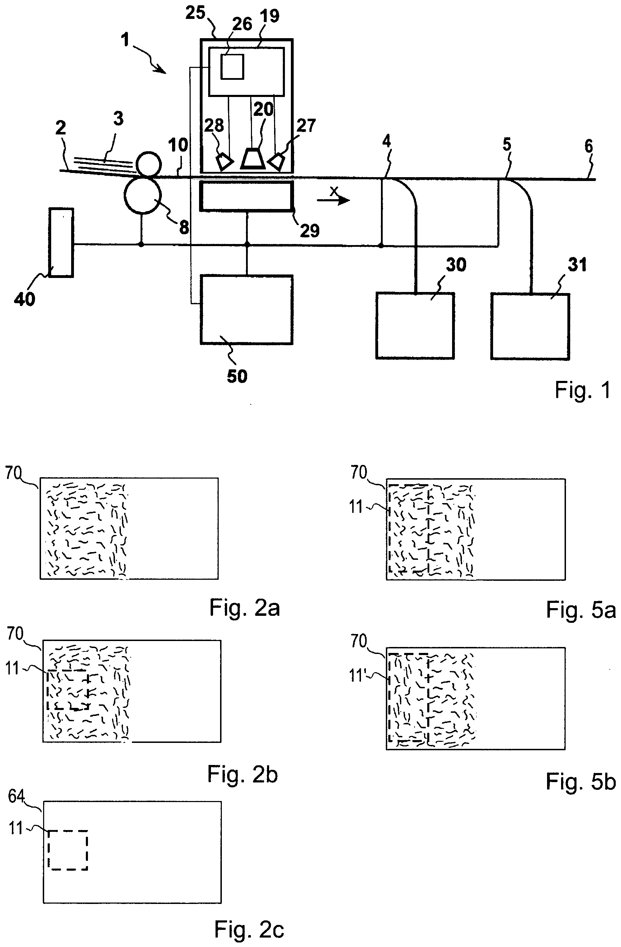

Fig. 1 zeigt beispielhaft den schematischen Aufbau einer Wertdokumentbearbeitungsvorrichtung 1 mit einem Eingabefach 2, in dem ein Stapel von zu bearbeitenden Banknoten 3 bereitgestellt wird, und einem Vereinzeler 8, von welchem nacheinander jeweils eine Banknote des eingegebenen Stapels erfasst und an eine - nur schematisch wiedergegebene - Transporteinrichtung 10 (Transportbänder und/ oder Transportrollen) übergeben wird, welche die Banknote zu deren Prüfung in Transportrichtung x an einem optischen Sensor 25 vorbeitransportiert.

Der optische Sensor 25 weist einen optischen Bildsensor 20 auf, der die von der vorbeitransportierten Banknote emittierten Lumineszenzintensitäten in entsprechende Sensorsignale umwandelt. Die optische Anregung der Lumineszenz der Banknote erfolgt z.B. mittels beidseitig des Bildsensors 20 angeordneter Anregungs-Lichtquellen 27, 28. Es kann aber auch nur eine der Lichtquellen verwendet werden. Der Bildsensor 20 weist z.B. eine Sensorzeile auf oder mehrere Sensorzeilen, z.B. für verschiedene spektrale Anteile des Lumineszenzlichts. Die Sensorzeile/n ist/sind quer zur Transportrichtung x der Banknoten angeordnet. Der Bildsensor 20 wird von einer Steuereinrichtung (nicht gezeigt) derart angesteuert, dass er die Lumineszenz der Banknote zu mehreren Detektionszeitpunkten detektiert, um die vorbeitransportierte Banknote optisch abzutasten. Entlang der Transportrichtung benachbart angeordnete Detektionsbereiche der Banknote werden dabei zeitlich nacheinander erfasst. Die nacheinander erfassten Detektionsbereiche der Banknote entsprechen jeweils einem Bildpunkt des Lumineszenzbilds.

Der optische Sensor 25 ist - in Transportrichtung x der Banknote betrachtet - auf der linken Seite des Transportpfads angeordnet. Gegenüberliegend zu dem optischen Sensor 25, auf der rechten Seite des Transportpfads, kann ein weiterer optischer Sensor 29 angeordnet sein, der ebenfalls einen optischen Bildsensor aufweist (nicht gezeigt) und ggf. Beleuchtungseinrichtungen zur optischen Anregung der Banknotenlumineszenz und ggf. eine eigene Auswerteeinrichtung. Das von dem optischen Bildsensor des gegenüberliegenden optischen Sensors 29 aufgenommene Lumineszenzbild wird ggf. an die Auswerteeinrichtung 19 des optischen Sensors 25 übertragen, um eine gemeinsame Auswertung beider Lumineszenzbilder derselben Banknote zu ermöglichen.

Das aufgenommene Lumineszenzbild leitet der Bildsensor 20 an die Auswerteeinrichtung 19 des optischen Sensors 25 weiter. Die Auswerteeinrichtung 19 kann in dem Gehäuse des optischen Sensors 25 enthalten sein oder aber außerhalb davon, z.B. in der Wertdokumentbearbeitungsvorrichtung 1. Die Auswerteeinrichtung 19 bestimmt den jeweiligen lokalen Faser-Kennwert eines oder mehrerer Orte, z.B. eines oder mehrerer Teilbilder, des von dem Bildsensor 20 aufgenommenen Lumineszenzbilds. Anhand der lokalen Faser-Kennwerte wird die Echtheit der Banknote geprüft und die Banknote ggf. als fälschungsverdächtig klassifiziert.

In einem Datenspeicher 26 der Auswerteeinrichtung 19 können für eine oder mehrere Wertdokumentarten Informationen über die Rasterpunkte oder Teilbilder und ggf. über Erwartungswerte hinterlegt sein. Der Auswerteeinrichtung 19 können von der Steuerungseinrichtung 50 der Vorrichtung 1 Informationen über die jeweils zu prüfende Wertdokumentart und ggf. über die Transportlage der Wertdokumente 3 übermittelt werden.

Abhängig von der durch die Auswerteeinrichtung 19 ermittelten Echtheit der jeweiligen Banknote werden die Transporteinrichtung 10 sowie die Weichen 4 und 5 entlang der Transportstrecke durch die Steuerungseinrichtung 50 derart gesteuert, dass die Banknote einem von mehreren Ausgabefächern 30 und 31 zugeführt und dort abgelegt wird. Beispielsweise werden in einem ersten Ausgabefach 30 Banknoten abgelegt, die als echt erkannt wurden, während als fälschungsverdächtig eingestufte Banknoten in einem zweiten Ausgabefach 31 abgelegt werden. Am Ende der dargestellten Transportstrecke (Bezugsziffer 6) können weitere Ausgabefächer und/ oder andere Einrichtungen vorgesehen sein, beispielsweise zur Aufbewahrung oder zur Zerstörung von Banknoten und/oder ein Rejectfach, in welches Banknoten für eine gesonderte Behandlung, beispielsweise durch eine Bedienperson, abgelegt werden.

Die Wertdokumentbearbeitungsvorrichtung 1 umfasst im dargestellten Beispiel ferner eine Ein-/ Ausgabeeinrichtung 40 zur Eingabe von Daten und/ oder Steuerungsbefehlen durch eine Bedienperson, beispielsweise mittels einer Tastatur oder eines Touchscreens, und zur Ausgabe oder Anzeige von Daten und/ oder Informationen zum Bearbeitungsprozess, insbesondere zu den jeweils bearbeiteten Banknoten.

### 1. Ausführungsbeispiel

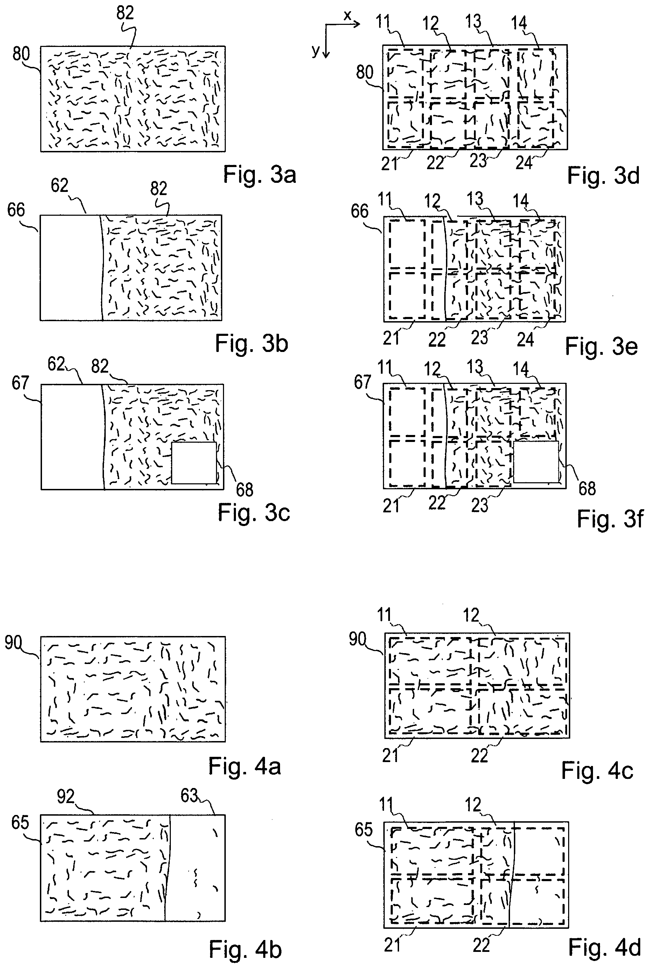

Figur 3a zeigt beispielhaft die Faserverteilung lumineszierender Fasern einer echten Banknote 80 der Währung A, Denomination 10. Und Figur 3b zeigt ein Beispiel für die Faserverteilung einer composed-Fälschung 66 zu dieser Banknote 80. Die composed-Fälschung 66 ist eine Zusammensetzung aus einem Teil 82 einer echten Banknote, die eine mittlere Faserdichte von 1/cm² aufweist und einem gefälschten Teil 62, der überhaupt keine Fasern aufweist.

Zur Auswertung werden zunächst die Fasern in dem von dem optischen Sensor 25 aufgenommenen Lumineszenzbild lokalisiert. Dann wird das Lumineszenzbild in einem Raster von z.B. 2x4 Rasterpunkten systematisch abgerastert. Im ersten Ausführungsbeispiel wird die als lokaler Faser-Kennwert die Faserdichte verwendet. Für jeden Rasterpunkt wird jeweils die lokale Faserdichte in einem um den jeweiligen Rasterpunkt liegenden Umgebungsbereich bestimmt, der einem Teilbild des Banknotenbilds entspricht. Im Beispiel der Fig. 3d,e,f sind die Umgebungsbereiche/Teilbilder 11-14, 21-24 in einem Raster aus 2 Zeilen und 4 Spalten über die Banknote verteilt. Die 8 Rasterpunkte liegen z.B. im jeweiligen Zentrum des jeweiligen Umgebungsbereichs bzw. Teilbilds. In der Auswerteeinrichtung 19 des optischen Sensors 25 ist das Raster der Teilbilder 11-14, 21-24 für mehrere Banknotenarten fest vorgegeben. Der Flächeninhalt der Teilbilder beträgt z.B. F=8cm². Es wird angenommen, dass der optische Sensor 25 zur Prüfung von Banknoten der Währungen A und D eingerichtet ist, bei denen alle Denominationen Fasern mit einer gleichmäßigen, aber über die Banknote zufälligen Verteilung, mit einer bestimmten mittleren Flächendichte (Dichte-Erwartungswert) aufweisen.

Der optische Sensor 25 erhält von der Wertdokumentbearbeitungsvorrichtung 1 oder von einem anderen Sensor der Wertdokumentbearbeitungsvorrichtung 1, Information über die zu prüfende Banknotenart. In einer im Datenspeicher 26 der Auswerteeinrichtung 19 hinterlegten Tabelle ist festgelegt, welche der vorgegebenen Teilbilder 11-14, 21-24 bei der jeweiligen Banknotenart tatsächlich untersucht werden sollen, vgl. Tabelle 1. Bei der Währung A, Denomination 10 sollen gemäß der Tabelle 1 alle Teilbilder der 1. und 2. Spalte geprüft werden, bei der Währung A, Denomination 50 nur 7 der möglichen 8 Teilbilder (Teilbild 24 wird ausgelassen). Mit Hilfe der dem optische Sensor 25 zur Verfügung gestellten Information über die zu prüfende Banknotenart kann die Auswerteeinrichtung 19 in Abhängigkeit der Banknotenart eines oder mehrere der möglichen Teilbilder zur Auswertung auswählen.

In der hinterlegten Tabelle 1 ist zur jeweiligen Banknotenart auch der Dichte-Erwartungswert DE der Fasern angegeben.

**Tabelle 1 für Währungen A und D, jeweils Denomination 10 und 50**

| | Dichte-Erwartungswert DE | Zu prüfende Teilbilder |
|---|---|---|
| Währung A, Denomination 10 | 1/cm² | 11-14, 21-24 |
| Währung A, Denomination 50 | 1/cm² | 11-14,21-23 |
| Währung D, Denomination 10 | 5/cm² | 11-14, 21-24 |
| Währung D, Denomination 50 | 2/cm² | 11-14, 21-24 |

Die akzeptable Schwankungsbreite S für die Faserdichte kann in Abhängigkeit des Dichte-Erwartungswerts und in Abhängigkeit des Flächeninhalts berechnet werden oder fest vorgegeben sein, z.B. S=0,5/cm².

Anhand des aufgenommenen Wertdokumentbilds bestimmt die Auswerteeinrichtung 19 des optischen Sensors 25 die Faseranzahl N in jedem der zu prüfenden Teilbilder und berechnet mit Hilfe des Flächeninhalts F daraus die jeweilige Faserdichte D=N/F. Diese vergleicht sie dann für jedes der zu prüfenden Teilbilder mit dem jeweiligen Dichte-Erwartungswert DE, bei Währung A mit DE=1/cm². Dabei wird geprüft, ob die Faserdichte D im Bereich DE+/-S liegt. Für den Fall der Währung A, Denomination 10 und 50, wird gemäß der Tabelle 1 z.B. geprüft, ob die Faserdichte in den Teilbildern im Bereich E+/-S= 1+/-0,5/cm² liegt, also zwischen 0,5/cm² und 1,5/cm² liegt. Wenn dies der Fall ist, wird das jeweilige Teilbild bzw. die Banknote als nicht-verdächtig eingestuft. Falls die Faserdichte D größer oder kleiner ist als DE+/-S, wird das jeweilige Teilbild bzw. die Banknote als fälschungsverdächtig klassifiziert.

Die composed-Fälschung 66 aus Fig. 3b, 3e ist ein composed-Fälschung zur Währung A, Denomination 10. Bei dieser werden entsprechend der Tabelle 1 alle Teilbilder 11-14 und 21-24 geprüft. In den beiden Teilbildern 11 und 21 werden keine Fasern gefunden (Faserdichte D=0) und diese daher als verdächtig eigestuft. Bei den Teilbildern 12 und 22 liegt die Faserdichte D noch im akzeptablem Bereich DE+ / -S, so dass diese nicht als verdächtig eingestuft werden. Und auch bei den Teilbildern 13,14,23,24 wird jeweils eine Faserdichte D im Bereich DE+/-S gefunden und diese als nicht verdächtig eingestuft. Aufgrund der zwei als verdächtig eingestuften Teilbilder 11 und 21 wird die composed-Fälschung 66 aus Fig. 3b, 3e als fälschungsverdächtig klassifiziert.

Bei der composed-Fälschung 67 aus Fig. 3c, 3f handelt sich um eine Fälschung zur Währung A, Denomination 50. Sowohl die echte Banknote als auch die Fälschung 67 weisen im Bereich 68 ein lumineszierendes Sicherheitselement auf. Dieses überstrahlt im Lumineszenzbild die Lumineszenz der lumineszierenden Fasern. Aus der Tabelle 1 entnimmt die Auswerteeinrichtung 19 des optischen Sensors 25, dass bei Währung A, Denomination 50 - im Unterschied zu Denomination 10 der Währung A - die Faserdichte nur in den Teilbildern 11-14 und 21-23 geprüft wird, im Teilbild 24 (das im Bereich des Lumineszenzelements 68 liegt) aber nicht geprüft wird. Die Prüfergebnisse der Teilbilder 11-14 und 21-23 entsprechend denen der Fälschung 66 aus Fig. 3b,3e.

Falls die Transportlage der Banknoten variabel ist, kann der Sensor eine Information über die Transportlage der Banknote erhalten und auf Basis der Transportlage bestimmen, in welchen Teilbildern die Faserdichte geprüft werden soll. Zu diesem Zweck können in der Tabelle 1 die Informationen über die zu prüfenden Teilbilder für bis zu vier Transportlagen der jeweiligen Banknotenart hinterlegt sein. Bei der Sensoradaption kann zur Erstellung der so erweiterten Tabelle 1 ermittelt werden, in welchem der Teilbilder 11-14, 21-24 sich das Lumineszenzelement 68 bei der jeweiligen Transportlage befindet und daher bei der Prüfung ausgelassen werden muss. Beispielsweise würde bei einer anderen Transportlage der composed-Fälschung 67, bei der das Lumineszenzelement 68 im Lumineszenzbild links unten ist, an Stelle des Teilbilds 24 das Teilbild 21 ausgelassen werden.

### 2. Ausführungsbeispiel

Figur 2a zeigt beispielhaft die Faserverteilung lumineszierender Melierfasern einer echten Banknote 70 der Währung B. Die Banknote 70 weist Melierfasern nur in der linken Hälfte auf, und zwar mit einer mittleren Flächendichte von 1/cm². Die rechte Hälfte der Banknote 70 weist keine Melierfasern auf. Der Sensor erhält in diesem Beispiel keine Information über zu die prüfende Banknotenart, sondern ist fest auf die Währung B eingestellt, deren Denominationen alle eine solche Faserverteilung haben.

Unabhängig von der Banknotenart ist in der Auswerteeinrichtung 19 für alle Denominationen der Währung B immer ein einziges Teilbild 11 in der linken Hälfte der Banknote festgelegt, vgl. Fig. 2b. Dessen Flächeninhalt kann fest vorgegeben sein, z.B. mit 10 cm². Es ist aber auch möglich, den Flächeninhalt bzw. die Größe in Abhängigkeit des für die Währung B bekannten Dichte-Erwartungswerts (gegeben durch die bekannte mittlere Flächendichte) zu wählen, der in der Auswerteeinrichtung 19 hinterlegt ist. Angenommen der Erwartungswert E soll 10 betragen, so wäre bei einem Dichte-Erwartungswert von 1/cm² ein Teilbild 11 mit 10 cm² Flächeninhalt zu wählen.

Zur Auswertung werden zunächst die Fasern in dem aufgenommenen Lumineszenzbild lokalisiert. Im zweiten Ausführungsbeispiel wird die als lokaler Faser-Kennwert die Anzahl der Fasern verwendet, die in einem Teilbild lokalisiert 11 sind. Fig. 2c zeigt eine Fälschung 64 zu einer Banknote der Währung B, die überhaupt keine Melierfasern aufweist. Im Teilbild 11 wird dann die Faseranzahl N=0 bestimmt. Da für die Währung B im Teilbild 11 jedoch eine Faseranzahl vom mehr als Null (E>0) erwartet wird, wird die Fälschung 64 aus Fig. 2c als fälschungsverdächtig klassifiziert.

Um auch Fälschungen mit einer falschen Anzahl an Fasern zu finden, kann eine genauere Prüfung durchgeführt werden, bei der die Faseranzahl N des jeweiligen Teilbilds mit dem Erwartungswert E für die Anzahl verglichen wird: Bei einer zur prüfenden Banknote wird dann die Anzahl N der Melierfasern in dem Teilbild 11 bestimmt und mit dem vorbestimmten Erwartungswert, z.B. E=10, verglichen. Bevorzugt wird bei dem Vergleich keine genaue Übereinstimmung mit dem Erwartungswert gefordert, sondern eine akzeptable Schwankungsbreite S um den Erwartungswert E zugelassen, z.B. S=5. Bei dem Vergleich wird geprüft, ob die Faseranzahl N im Bereich E+/-S liegt oder nicht. Falls nein, wird die Banknote als fälschungsverdächtig klassifiziert, falls ja, als nicht fälschungsverdächtig.

Im konkreten Beispiel, mit E=10 und S=5, wird die Banknote in Abhängigkeit der Faseranzahl N folgendermaßen klassifiziert:
- Falls keine oder bis zu 4 Melierfaser enthalten ist (wie bei Fälschung 64 aus Fig. 2c): fälschungsverdächtig
- Falls 5 bis 15 Melierfasern gezählt werden (wie bei der echten Banknote 70 aus Fig. 2a,b): nicht-fälschungsverdächtig
- Falls mehr als 15 Melierfasern gezählt werden: fälschungsverdächtig.

Wenn bei der Wertdokumentbearbeitungsvorrichtung die Transportlage der Banknoten variabel ist, können dem optischen Sensor 25 Informationen über die Transportlage übermittelt werden, anhand derer dieser die Position von Teilbild 11 derart festlegt, dass das Teilbild 11 in einem Banknotenabschnitt liegt, in dem bei der echten Banknote 70 die Fasern vorhanden sind. Bei der Transportlage aus Fig. 2a,b wird das Teilbild 11 daher in die linke Hälfte des Wertdokumentbilds der Banknote 70 gelegt. Bei anderer Transportlage der Banknote 70, bei der die Fasern im Wertdokumentbild rechts sind, würde das Teilbild 11 in die rechte Hälfte des Wertdokumentbilds platziert werden.

### 3. Ausführungsbeispiel

In Figur 4a ist eine echte Banknote 90 der Währung C, Denomination 50 gezeigt, die über die Banknote etwa gleichmäßig verteilte Fasern mit einer mittleren Flächendichte (Dichte-Erwartungswert) von 0,66/cm² aufweist, die für alle Denomination der Währung C gilt.

Und Figur 4b zeigt ein Beispiel für die Faserverteilung einer composed-Fälschung 65 zur Banknote 90, bei der ein Teil 92 einer echten Banknote mit einem gefälschten Teil 63 kombiniert ist, in dem eine geringere Faserdichte vorliegt als bei der echten Banknote. Der echte Teil 92 weist z.B. eine mittlere Faserdichte von 0,67/cm² auf, der gefälschte Teil 63 von 0,1/cm².

Aufgrund der bekanntermaßen geringeren mittleren Flächendichte der Fasern legt die Auswerteeinrichtung 19 bei Währung C Teilbilder mit größerem Flächeninhalt fest als bei Währung A.

Bei der Sensoradaption wurde für jede vom Sensor zu prüfenden Banknotenart eine Tabelle 2 mit einer Teilbild-Definition (Lage und Abmessungen), einem Erwartungswert E und einer akzeptablen Schwankungsbreite S für jedes Teilbild bestimmt, vgl. in Tabelle 2. Der jeweilige Flächeninhalt ergibt sich aus der Teilbildbreite dx und Teilbildhöhe dy durch Multiplikation. Die Teilbilder 11, 12, 21, 22 aus Tabelle 2 haben alle die gleiche Form und Größe, vgl. Fig. 4c.

**Tabelle 2 für Währung C, alle Denomination**

| Teilbild-Nummer | Teilbild-Koordinaten (x, y) (linke obere Ecke) | Teilbildbreite dx in mm | Teilbildhöhe dy in mm | Erwartungswert E | Schwankungsbreite S |
|---|---|---|---|---|---|
| 11 | 5,5 | 60 | 40 | 16 | 5 |
| 12 | 5,50 | 60 | 40 | 16 | 5 |
| 21 | 70, 5 | 60 | 40 | 16 | 5 |
| 22 | 70, 50 | 60 | 40 | 16 | 5 |

Durch die expliziten Teilbild-Definitionen in der Tabelle 2 sind aber auch unterschiedliche Teilbild-Größen auf derselben Banknote möglich. Die Erwartungswerte E und Schwankungsbreiten S sind hier für alle Teilbilder 11, 12, 21, 22 gleich, da deren Flächeninhalt gleich ist. Sie können aber auch verschieden sein, z.B. im Fall von Teilbildern verschiedener Flächeninhalte. Bei größerem Flächeninhalt kann auch eine größere Schwankungsbreite S zugelassen werden. Im optischen Sensor 25 sind auch entsprechende Tabellen für anderen Denominationen oder Währungen hinterlegt, für die im Allgemeinen andere Zahlenwerte gelten. Bei nicht-gleichmäßig verteilten Fasern, wie z.B. bei der Banknote 70 der Währung B aus Fig. 2a, würden die entsprechende Tabelle verschiedene Erwartungswerte E für verschiedene Teilbilder enthalten.

Die akzeptable Schwankungsbreite S kann in der Tabelle angegeben sein. Sie kann auch in erst Abhängigkeit des Erwartungswerts E berechnet werden, z.B. 40% des Erwartungswerts E, oder für den Bediener der Wertdokumentbearbeitungsvorrichtung einstellbar sein.

Der optische Sensor 25 erhält eine Information über zu die prüfende Banknotenart, d.h. Währung C und ggf. die Denomination, von der Wertdokumentbearbeitungsvorrichtung 1 oder von einem anderen Sensor. Mit Hilfe der Information über die zu prüfende Banknotenart entnimmt die Auswerteeinrichtung 19 der Tabelle 2 die Informationen über die für die zu prüfenden Banknotenart vorbestimmten Teilbilder.

Zur Auswertung werden wieder zunächst die Fasern in dem von dem optischen Sensor 25 aufgenommenen Lumineszenzbild lokalisiert. Anhand des von der zu prüfenden Banknote aufgenommenen Lumineszenzbild kann z.B. die Anzahl N an Fasern in jedem dieser Teilbilder 11,12,21,22 bestimmt und mit dem jeweiligen Erwartungswert E+/-S verglichen werden. Im Beispiel der Währung C, Denomination 10 wird in jedem der Teilbilder 11, 12, 21, 22 eine Faserzahl von E+/-S im Bereich von 11 bis 21 erwartet. Bei der composed-Fälschung 65 der Fig. 4b, 4d werden in den Teilbildern 11 und 21 tatsächlich 18 Melierfasern gefunden, so dass diese Teilbilder nicht als verdächtig eingestuft werden. Bei den Teilbildern 12 und 22 wird hingegen jeweils eine geringe Melierfaserzahl von 8 bzw. 10 gefunden und diese daher als verdächtig eingestuft. Da mindestens ein Teilbild als verdächtig eingestuften wird (12 und 22), wird die composed-Fälschung 65 aus Fig. 4b, 4d als fälschungsverdächtig im Hinblick auf eine composed-Fälschung klassifiziert.

Zusätzlich oder alternativ zur Anzahl der Fasern im jeweiligen Teilbild, kann auch eine Beschaffenheit der Fasern im jeweiligen Teilbild als lokaler Faser-Kennwert verwendet werden, wie z.B. die Länge der Fasern, deren Aspektverhältnis (Breite-Länge-Verhältnis), die Form oder die Farbe der Fasern oder der jeweilige Mittelwert dieser Beschaffenheit über das jeweilige Teilbild oder die Streuung dieser Beschaffenheit um diesen Mittelwert im jeweiligen Teilbild. Dann können auffällige Teilbilder identifiziert werden, deren Beschaffenheit bzw. Mittelwert bzw. Streuung von einem Referenzwert (um mehr als eine akzeptable Schwankungsbreite) abweicht. Und das Wertdokument wird als fälschungsverdächtig klassifiziert, wenn eines oder mehrere in dieser Hinsicht auffällige Teilbilder gefunden wurden.

### 4. Ausführungsbeispiel

Im vierten Ausführungsbeispiel wird eine Banknote mit über die Banknote gleichmäßig verteilten Fasern betrachtet, wie z.B. die Banknote 90 der Währung C in Fig. 4a.

Zur Auswertung werden wieder zunächst die Fasern in dem von dem optischen Sensor 25 aufgenommenen Lumineszenzbild lokalisiert und die Anzahl N an Fasern in jedem der Teilbilder 11,12,21,22 bestimmt.

Im Gegensatz zum dritten Ausführungsbeispiel ist der Erwartungswert E für die Faseranzahl aber nicht im Sensor hinterlegt, ist also nicht vordefiniert, sondern wird erst bei Prüfung der jeweiligen Banknote bestimmt. Es wird eine relative Prüfung der Faseranzahl mindestens zweier verschiedener Teilbilder durchgeführt, wobei die Faserzahl mindestens eines bestimmten Teilbilds den Erwartungswert E für das oder die anderen Teilbilder definiert.

Zum Beispiel kann bei der Banknote 90 der Währung C aus Fig. 4c die Faserzahl des Teilbilds 11 (z.B. N=18) den Erwartungswert E für die anderen Teilbilder 12, 21 und 22 vorgeben, d.h. E=18. Es folgt ein Vergleich der Faserzahl N der Teilbilder 12, 21, 22 mit E=18. Bei einem Unterschied von mehr als der akzeptablen Schwankungsbreite S (mit S=4 wird z.B. eine Faserzahl im Bereich 14-22 erwartet) wird die zu prüfende Banknote als fälschungsverdächtig klassifiziert. Für die Fälschung 65 aus Fig. 4b, 4d ergibt sich dann folgendes:
Teilbild 11: N=18, wird als Erwartungswert E definiert,
Teilbild 12: 10 Fasern, fälschungsverdächtig,
Teilbild 21: 17 Fasern, nicht-fälschungsverdächtig,
Teilbild 22: 9 Fasern, fälschungsverdächtig.

Im Fall gleichmäßig verteilter Fasern und flächengleicher Teilbilder, wie der Teilbilder 12, 12, 21 22 aus Fig. 4c, 4d, kann als Erwartungswert für eines der Teilbilder auch die durchschnittliche Faserzahl der anderen Teilbilder 12, 21 und 22 verwendet werden: So kann als Erwartungswert für Teilbild 11 z.B. die durchschnittliche Faserzahl der Teilbilder 12, 21 und 22 verwendet werden, die in obigem Beispiel E=12 ergibt. Mit einer Schwankungsbreite von S=4 wird eine Faserzahl von 8-16 erwartet. Die Abweichung der Faserzahl in Teilbild 11 (N=18) wird dann als verdächtig eingestuft.

In einer zusätzlichen Prüfung kann als Erwartungswert für das Teilbild 22 die durchschnittliche Faserzahl der Teilbilder 11, 12 und 21 verwendet werden, die in obigem Beispiel E=15 ergibt. Mit einer Schwankungsbreite S=4 wird eine Faserzahl von 11-19 erwartet und die Abweichung von Teilbild 22 (N=9) als verdächtig eingestuft.

### 5. Ausführungsbeispiel

Im fünften Ausführungsbeispiel wird eine Banknote mit lumineszierenden Fasern betrachtet. Von dieser werden in der Wertdokumentbearbeitungsvorrichtung 1 zwei Lumineszenzbilder von gegenüberliegenden Seiten aufgenommen und die dort abgebildeten Fasern lokalisiert.

Als Beispiel wird die Banknote 70 der Währung B aus Fig. 2a betrachtet, die nur in ihrer linken Hälfte lumineszierende Fasern aufweist. Bei der Prüfung in der Wertdokumentbearbeitungsvorrichtung 1 nimmt der optische Sensor 25 ein Lumineszenzbild der Banknotenvorderseite der Banknote 70 auf, vgl. Fig. 5a, und der gegenüberliegende optische Sensor 29 nimmt gleichzeitig ein Lumineszenzbild der Banknotenrückseite der Banknote 70 auf, vgl. Fig. 5b.

Da das Lumineszenzlicht durch das Wertdokumentsubstrat üblicherweise stark gedämpft wird, ist auf der jeweiligen Seite normalerweise nur das Lumineszenzlicht der auf oder unmittelbar unter der Wertdokumentoberfläche liegenden Fasern erfassbar, nicht jedoch das Lumineszenzlicht der tiefer im Substrat oder auf der anderen Wertdokumentseite gelegenen Fasern. Die lumineszierenden Fasern der Vorderseite sind daher nur im Lumineszenzbild der Banknotenvorderseite zu erkennen, aber nicht in dem Lumineszenzbild der Banknotenrückseite und umgekehrt.

Die Prüfung beider gegenüberliegender Lumineszenzbilder ermöglicht eine besonders genaue beidseitige Prüfung der Banknote, bei der der lokale Faser-Kennwert für zwei zueinander korrespondierende Teilbilder der gegenüberliegenden Seiten ein und desselben Banknotenabschnitts bestimmt wird.

Im Vorderseitenbild der Banknote 70 wird in einem Teilbild 11 z.B. die Anzahl N1 an lumineszierenden Fasern bestimmt, vgl. Fig. 5a. Im Rückseitenbild der Banknote 70 wird ein Teilbild 11' definiert, das deckungsgleich mit dem Teilbild 11 des Vorderseitenbilds ist und die genau denselben Banknotenabschnitt abdeckt wie das Teilbild 11 der Vorderseite. Die Teilbilder 11 und 11' zeigen also die Vorder- und Rückseite ein und desselben Banknotenabschnitts. Zum Beispiel liegen die beiden Teilbilder 11, 11' im Weißfeld der Banknote 70. Für das Teilbild 11' der Rückseite wird eine Anzahl N2 an lumineszierenden Fasern bestimmt.

Die Summe an lumineszierenden Fasern beider Teilbilder 11, 11' ergibt die Gesamtzahl (N_{ges}=N1+N2) an Fasern, die in dem jeweiligen ersten Teilbild 11 und in dem jeweils korrespondierenden zweiten Teilbild 11' insgesamt enthalten sind. Im Fall der echten Banknote 70 wird für die Summe der lumineszierenden Fasern z.B. eine Summe von 20 Fasern erwartet (d.h. Erwartungswert E=20). Die geprüfte Banknote wird dann in Abhängigkeit der Gesamtzahl N_{ges} als fälschungsverdächtig klassifiziert oder nicht-fälschungsverdächtig.

Falls z.B. bei einer composed-Fälschung z.B. im linken Teil der Banknote 70 die echte Banknote durch ein Papierstück ohne lumineszierende Fasern ersetzt wurde, so würde sowohl im Teilbild 11 als auch im Teilbild 11' entsprechende eine Gesamtzahl von N_{ges}=0 lumineszierenden Fasern bestimmt werden und die composed-Fälschung folglich aussortiert werden. Die Gesamtzahl N_{ges} an Fasern kann mit dem Erwartungswert E=20 verglichen werden und bei zu großer Abweichung von E (mehr als die akzeptable Schwankungsbreite S) als fälschungsverdächtig klassifiziert werden, bei nur geringer Abweichung als nicht-fälschungsverdächtig. Es können aber auch andere lokale Faser-Kennwerte zur Prüfung der miteinander korrespondierenden Teilbilder 11, 11' verwendet werden.

### 6. Ausführungsbeispiel

Im sechsten Ausführungsbeispiel wird die composed-Fälschung 65 aus Figur 4b betrachtet, die eine Fälschung der Banknote 90 aus Fig. 4a ist, wobei der ein Teil 92 einer echten Banknote mit einem gefälschten Teil 63 mit geringerer Faserdichte kombiniert ist.

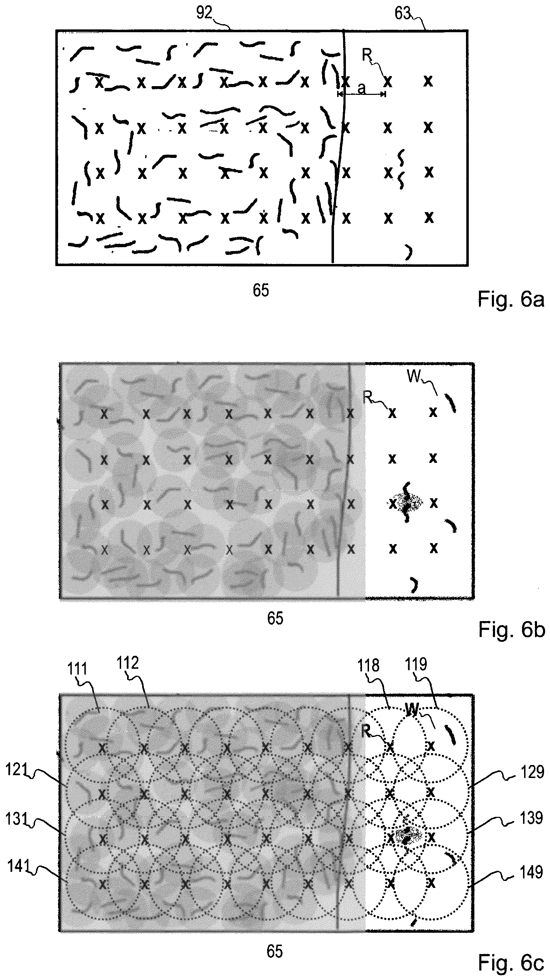

Zur Auswertung werden wieder zunächst die Fasern in dem von dem optischen Sensor 25 aufgenommenen Lumineszenzbild lokalisiert. Dann wird das Lumineszenzbild in einem Raster von Rasterpunkten R systematisch abgerastert. Im Beispiel der Fig. 6a sind die Rasterpunkte R in einem Raster aus 3 Zeilen und 9 Spalten über die Banknote verteilt.

Als lokaler Faser-Kennwert des jeweiligen Rasterpunkts wird der Abstand a des jeweiligen Rasterpunkts R zu jeweils nächstgelegenen Faser verwendet, vgl. Fig. 6a, und mit einem Referenzabstand verglichen, der in Abhängigkeit des Dichte-Erwartungswerts DE der Fasern gewählt wird. Diejenigen Rasterpunkte werden als auffällig eingestuft, deren Abstand a größer ist als der Referenzabstand. Das Wertdokument wird dann z.B. in Abhängigkeit davon, ob eine bzw. mehrere auffällige Rasterpunkte im Banknotenbild gefunden werden, als fälschungsverdächtig eingestuft, oder z.B. in Abhängigkeit davon, ob eine oder mehrere auffällige Regionen gefunden werden, die mehrere auffällige (z.B. einen Mindestanteil auffälliger) Rasterpunkte aufweisen. Die Einstufung des Wertdokuments als fälschungsverdächtig kann auch in Abhängigkeit der Position der auffälligen Rasterpunkte bzw. Regionen auf dem Wertdokument erfolgen.

Im Beispiel der composed-Fälschung 65 aus Fig. 6a weisen die rechten beiden Spalten an Rasterpunkten jeweils viele in dieser Hinsicht auffällige Rasterpunkte auf und bilden eine auffällige Region. Die composed-Fälschung 65 wird daher als fälschungsverdächtig klassifiziert.

### 7. Ausführungsbeispiel

Das siebte Ausführungsbeispiel geht auch von den im sechsten Ausführungsbeispiel beschriebenen Rasterpunkten R aus, vgl. Fig. 6b.

Zur Auswertung des Lumineszenzbilds wird jeder lokalisierten Faser ein (flächiger) Wirkungsbereich W zugeordnet, vgl. die grau markierten Flächen in Fig. 6b. Der Wirkungsbereich W ist ein nur zum Zweck der Auswertung definierter Bereich um die jeweilige Faser, der aber nicht physisch auf dem Wertdokument vorhanden ist. Im gezeigten Beispiel werden kreisförmige Wirkungsbereiche W um die jeweilige Faser definiert, die sich im Inneren (z.B. im Zentrum) des ihr zugeordneten Wirkungsbereichs W befindet. Die Größe bzw. Fläche des Wirkungsbereichs W wird bevorzugt in Abhängigkeit eines Dichte-Erwartungswerts DE der Fasern festgelegt. Beispielsweise die Fläche F der Wirkungsbereiche W mittels der Formel F=K/DE gewählt, wobei K ein Zahlenfaktor ist. Zum Beispiel kann mit einem Zahlenfaktor K=1 die Wirkungsbereich-Fläche so groß gewählt, dass bei einer Faserdichte, die gleich dem Dichte-Erwartungswert ist, die Summe der Flächen aller Wirkungsbereiche der Banknotenfläche entspricht.

Als lokaler Faser-Kennwert wird z.B. die Zugehörigkeit (ja/nein) des jeweiligen Rasterpunkts R zu einem oder mehreren der Wirkungsbereiche W um die Fasern verwendet. Für jeden Rasterpunkt wird also geprüft, ob dieser in einem oder mehreren der Wirkungsbereiche W liegt oder nicht. Falls ja, wird der jeweilige Rasterpunkt als zu einem Wirkungsbereich zugehörig klassifiziert, und falls nein, wird der jeweilige Rasterpunkt als nicht zu einem Wirkungsbereich zugehörig klassifiziert.

Dann werden eine oder mehrere auffällige Regionen des Wertdokumentbilds gesucht, in denen die Anzahl bzw. der Anteil an Rasterpunkten, die als nicht zu einem Wirkungsbereich zugehörig klassifiziert wurden, größer ist als erwartet. Im Beispiel aus Fig. 6a liegt in den rechten beiden Spalten, die im gefälschten Teil 63 der composed-Fälschung 65 liegen, der Anteil an Rasterpunkten, die als nicht zu einem Wirkungsbereich zugehörig klassifiziert wurden, jeweils bei 3 von 4 Rasterpunkten, entsprechend 75%. Dieser Anteil wird z.B. mit einem Referenzanteil (z.B. 50%) verglichen und bei Überschreiten des Referenzanteils wird die jeweilige Spalte des Rasters als auffällig eingestuft. Der Referenzanteil kann vorbestimmt oder einstellbar sein oder in Abhängigkeit der Anteile an nicht zu einem Wirkungsbereich zugehörigen Rasterpunkten anderer Banknotenbereiche bestimmt werden. Zum Beispiel kann der Anteil der nicht zu einem Wirkungsbereich zugehörigen Rasterpunkten der jeweiligen rechten Spalten mit dem mittleren Anteil an nicht zu einem Wirkungsbereich zugehörigen Rasterpunkten verglichen werden, der für mehrere der linken Spalten des Rasters ermittelt wird.

Das Wertdokument kann dann in Abhängigkeit davon, ob eine bzw. mehrere auffällige Spalten gefunden werden, als fälschungsverdächtig klassifiziert werden. So wird die composed-Fälschung 65 aufgrund der zwei auffälligen rechten Spalten als fälschungsverdächtig klassifiziert.

### 8. Ausführungsbeispiel

Das achte Ausführungsbeispiel geht auch von den im sechsten Ausführungsbeispiel beschriebenen Rasterpunkten R aus und von den im siebten Ausführungsbeispiel verwendeten Wirkungsbereichen W.

Jedem der Rasterpunkte R wird um den jeweiligen Rasterpunkt herum ein (flächiger) Umgebungsbereich 111-119, 121-129, 131-139, 141-149 zugeordnet, der einem Teilbild des Banknotenbilds entspricht, vgl. Fig. 6c. Die Umgebungsbereiche 111-119, 121-129, 131-139, 141-149 überlappen miteinander. Die Rasterpunkte R liegen z.B. im Zentrum des jeweiligen Umgebungsbereichs.

Als lokaler Faser-Kennwert wird der Anteil der von mindestens einem Wirkungsbereich W überdeckten Fläche (grau oder dunkelgrau) oder der nicht von mindestens einem Wirkungsbereich überdeckte Fläche (weiß) an dem jeweiligen Umgebungsbereich um den jeweiligen Rasterpunkt verwendet. Hierzu können in dem jeweiligen Umgebungsbereich Überdeckungsbereiche identifiziert werden (in Fig. 6c grau bzw. dunkelgrau), die zum Wirkungsbereich mindestens einer der Fasern gehören (dies können Fasern innerhalb oder außerhalb des jeweiligen Umgebungsbereichs sein, deren Wirkungsbereich z.T. im Umgebungsbereich liegt). Alternativ oder zusätzlich können im jeweiligen Umgebungsbereich Freibereiche (weiß) identifiziert werden, die zu keinem Wirkungsbereich mindestens einer der Fasern gehören. Alternativ oder zusätzlich können im jeweiligen Umgebungsbereich auch Überlappungsbereich identifiziert werden, in denen die Wirkungsbereiche (benachbarter) Fasern überlappen (dunkelgrau).

Anhand der Größe des jeweiligen Überdeckungsbereichs und/oder Freibereichs und/oder Überlappungsbereichs wird ein lokaler Faser-Kennwert des jeweiligen Umgebungsbereichs bestimmt. Als lokaler Faser-Kennwert kann z.B. verwendet werden
- der Flächenanteil der (grauen) Überdeckungsbereiche an dem jeweiligen Umgebungsbereich (z.B. Prozentangabe), oder
- der Flächenanteil der (weißen) Freibereiche an dem jeweiligen Umgebungsbereich (z.B. Prozentangabe), oder
- der Flächenanteil der (dunkelgrauen) Überlappungsbereich an dem jeweiligen Umgebungsbereich (z.B. Prozentangabe), oder
- der Flächeninhalt der Überdeckungsbereiche und/oder der Flächeninhalt der Freibereiche und/ oder der Flächeninhalt der Überlappungsbereiche.

Das Wertdokument wird dann als fälschungsverdächtig klassifiziert in Abhängigkeit eines oder mehrerer dieser Anteile bzw. Flächeninhalte, die für die untersuchten Umgebungsbereiche des Wertdokuments ermittelt wurden.

Zum Beispiel kann der jeweilige Anteil bzw. Flächeninhalt des jeweiligen Umgebungsbereichs mit einem Referenzwert verglichen werden und bei Überschreiten des Referenzwerts der jeweilige Umgebungsbereich als auffällig eingestuft werden. Bei der composed-Fälschung 65 sind z.B. die Umgebungsbereiche 118,119, 128, 129, 138, 139, 147, 148, 149 in dieser Hinsicht auffällig. Das Wertdokument kann dann in Abhängigkeit davon, ob einer bzw. mehrere auffällige Umgebungsbereiche gefunden werden, als fälschungsverdächtig klassifiziert werden.

Alternativ kann auch der Mittelwert der Anteile bzw. Flächeninhalte aller Umgebungsbereiche des Wertdokumentbilds bestimmt werden und die Streuung der Anteile bzw. Flächeninhalte um diesen Mittelwert ausgewertet werden. Bei zu großer Streuung würde das Wertdokument als fälschungsverdächtig aussortiert werden.

## Patentansprüche

1. Sensor (25) zur Prüfung eines Wertdokuments, das eine Vielzahl von Fasern aufweist, die über das Wertdokument verteilt sind, und das zu dessen Prüfung in einen Erfassungsbereich des Sensors gebracht wird, wobei der Sensor aufweist:
- eine Bilderfassungseinrichtung, die dazu eingerichtet ist, ein Wertdokumentbild des Wertdokuments (3) zu erfassen, wobei das Wertdokumentbild ein charakteristisches optisches oder magnetisches Signal der Fasern zeigt, und
- eine Auswerteeinrichtung (19), die zum Auswerten des Wertdokumentbilds dazu eingerichtet ist,
- die Fasern zu lokalisieren, die in dem jeweiligen Wertdokumentbild enthalten sind, und
- für mehrere verschiedene Orte des Wertdokumentbilds jeweils mindestens einen lokalen Faser-Kennwert zu ermitteln, der für den jeweiligen Ort und ggf. für eine Umgebung des jeweiligen Orts auf dem Wertdokumentbild gilt, wobei die Auswerteeinrichtung (19) über eine Information über die Wertdokumentart des zu prüfenden Wertdokuments verfügt, welche die Währung oder die Denomination des zu prüfenden Wertdokuments ist, und dazu eingerichtet ist, die Orte des Wertdokumentbilds, für die der jeweilige lokale Faser-Kennwert bestimmt wird, in Abhängigkeit der Wertdokumentart des zu prüfenden Wertdokuments zu bestimmen, und
- das Wertdokument (3) in Abhängigkeit des mindestens einen lokalen Faser-Kennwerts als fälschungsverdächtig oder nicht fälschungsverdächtig zu klassifizieren.

2. Sensor (25) nach Anspruch 1, wobei die Auswerteeinrichtung (19), zum Auswerten des Wertdokumentbilds dazu eingerichtet ist, das Wertdokumentbild unter Verwendung von Rasterpunkten (R) punktweise abzurastern, wobei für jeden Rasterpunkt des Wertdokumentbilds ein lokaler Faser-Kennwert ermittelt wird, und das Wertdokument (3) in Abhängigkeit der für die Rasterpunkte ermittelten lokalen Faser-Kennwerte als fälschungsverdächtig zu klassifizieren.

3. Sensor (25) nach Anspruch 2, wobei die Auswerteeinrichtung (19), zum Auswerten des Wertdokumentbilds dazu eingerichtet ist,
- einen oder mehrere auffällige Rasterpunkte zu identifizieren, die im Hinblick auf den an dem jeweiligen Rasterpunkt ermittelten lokalen Faser-Kennwert auffällig sind,
- eine oder mehrere auffällige Regionen des Wertdokumentbilds zu identifizieren, in denen sich auffällige Rasterpunkte befinden, und
- das Wertdokuments als fälschungsverdächtig zu klassifizieren in Abhängigkeit einer oder mehrerer Eigenschaften der jeweiligen auffälligen Region und/oder in Abhängigkeit der lokalen-Faser-Kennwerte, die für die Rasterpunkte der jeweiligen auffälligen Region ermittelt wurden.

4. Sensor (25) nach Anspruch 2 oder 3, wobei die Auswerteeinrichtung (19)
- zum Auswerten des Wertdokumentbilds dazu eingerichtet ist, den lokalen Faser-Kennwert, der für den jeweiligen Rasterpunkt des Wertdokumentbilds ermittelt wird, für einen dem jeweiligen Rasterpunkt zugeordneten Umgebungsbereich (111-119, 141-149) zu ermitteln, oder
- zum Auswerten des Wertdokumentbilds dazu eingerichtet ist, den jeweiligen lokalen Faser-Kennwert, der für den jeweiligen Rasterpunkt des Wertdokumentbilds ermittelt wird, punktuell für den jeweiligen Rasterpunkt zu ermitteln.

5. Sensor nach einem der vorhergehenden Ansprüche, wobei die Auswerteeinrichtung (19), zum Auswerten des Wertdokumentbilds dazu eingerichtet ist,
- eines oder mehrere Teilbilder (11-14, 21-24, 111-119, 141-149) des Wertdokumentbilds zu bestimmen, die jeweils einen Ausschnitt des Wertdokumentbilds enthalten, wobei das jeweilige Teilbild des Wertdokumentbilds insbesondere ein Umgebungsbereich jeweils eines der Rasterpunkte gemäß Anspruch 4 sein kann,
- den lokalen Faser-Kennwert für das jeweilige Teilbild zu bestimmen,
- das Wertdokument (3) in Abhängigkeit des/ der lokalen Faser-Kennwerts/e eines oder mehrerer der Teilbilder als fälschungsverdächtig zu klassifizieren.

6. Sensor (25) nach einem der vorhergehenden Ansprüche, wobei als lokaler Faser-Kennwert ein Maß für lokale Dichte der Fasern verwendet wird, insbesondere
- die Anzahl (N) an Fasern, die sich in der Umgebung des jeweiligen Orts, insbesondere in dem jeweiligen Teilbild (11-14, 21-24) bzw. im jeweiligen Umgebungsbereich (111-119, 141-149) eines Rasterpunkts befinden, oder
- die Faser-Dichte in der Umgebung des jeweiligen Orts, insbesondere im jeweiligen Teilbild bzw. im jeweiligen Umgebungsbereich, oder
- ein für den Abstand zwischen den Fasern charakteristisches Abstandsmaß der Fasern in der Umgebung des jeweiligen Orts, z.B. ein mittlerer Abstand der Fasern des Teilbilds bzw. des Umgebungsbereichs von der zur jeweiligen Faser am nächsten benachbarten Faser.

7. Sensor nach einem der Ansprüche 5 bis 6, **dadurch gekennzeichnet, dass** die Auswerteeinrichtung (19) dazu eingerichtet ist, mindestens zwei Teilbilder des Wertdokumentbilds zu bestimmen, die zusammen vorzugsweise mindestens 50% der Fläche einer Wertdokumentseite des Wertdokuments abdecken, besonders bevorzugt mindestens 75% der Fläche einer Wertdokumentseite des Wertdokuments, wobei die Teilbilder insbesondere zeilenweise und/oder spaltenweise auf dem Wertdokument angeordnet sind, wobei die Teilbilder beispielsweise in einem Raster aus mindestens zwei Zeilen und/oder mindestens zwei Spalten auf dem Wertdokument angeordnet sind.

8. Sensor (25) nach einem der vorhergehenden Ansprüche, wobei als lokaler Faser-Kennwert ein Maß für die lokale Beschaffenheit der Fasern an dem jeweiligen Ort und ggf. in der Umgebung des jeweiligen Orts verwendet wird, die insbesondere die Form oder Größe oder Farbe oder Helligkeit der Fasern an dem jeweiligen Ort und ggf. in der Umgebung des jeweiligen Orts betrifft, wobei als lokaler Faser-Kennwert ein repräsentativer Wert, z.B. ein Mittelwert, der lokalen Beschaffenheit der Fasern an dem jeweiligen Ort und ggf. in der Umgebung des jeweiligen Orts verwendet wird.

9. Sensor (25) nach einem der vorhergehenden Ansprüche, der dazu eingerichtet ist, anhand einer oder mehrerer Eigenschaften der in dem Wertdokumentbild lokalisierten Fasern und/oder anhand eines oder mehrerer der lokalen Faser-Kennwerte des jeweiligen Wertdokuments, die für den oder die verschiedenen Orte des Wertdokumentbilds ermittelt wurden, individuelle Fingerabdruckdaten des jeweiligen Wertdokuments zu bestimmen, die individuellen Fingerabdruckdaten zu Bearbeitungsdaten des jeweiligen Wertdokuments zuzuordnen und zusammen mit den Bearbeitungsdaten des jeweiligen Wertdokuments, ggf. in einer Liste für mehrere Wertdokumente, jeweils einander zugeordnet abzuspeichern.

10. Sensor nach einem der vorhergehenden Ansprüche, **dadurch gekennzeichnet, dass** die Auswerteeinrichtung (19) über eine Information über die Wertdokumentart des zu prüfenden Wertdokuments verfügt und dazu eingerichtet ist, das Bestimmen der Teilbilder in Abhängigkeit der Wertdokumentart des zu prüfenden Wertdokuments durchzuführen, wobei in der Auswerteeinrichtung z.B. mehrere Teilbilder fest vordefiniert sind und die Auswerteeinrichtung dazu eingerichtet ist, von diesen fest vordefinierten Teilbildern in Abhängigkeit der Wertdokumentart des zu prüfenden Wertdokuments bestimmte Teilbilder zum Auswerten zu bestimmen.

11. Sensor nach einem der vorhergehenden Ansprüche, **dadurch gekennzeichnet, dass**
- der Sensor zur Prüfung von Wertdokumenten einer oder mehrerer bestimmter Wertdokumentarten eingerichtet ist, deren Wertdokumente jeweils mindestens ein störendes Sicherheitselement (68) aufweisen, welches die Erfassung des charakteristischen optischen oder magnetischen Signals der Fasern beeinträchtigt, und
- die Auswerteeinrichtung (19) des Sensors dazu eingerichtet ist, die Wertdokumente der bestimmten Wertdokumentart in Abhängigkeit des mindestens einen lokalen Faser-Kennwerts nur eines oder mehrerer solcher Orte des Wertdokumentbilds als fälschungsverdächtig zu klassifizieren, bei denen die Erfassung des optischen oder magnetischen Signals der Fasern nicht durch das mindestens eine störende Sicherheitselement (68) beeinträchtigt ist.

12. Sensor (25) nach einem der vorhergehenden Ansprüche, wobei die Auswerteeinrichtung (19), zum Auswerten des Wertdokumentbilds dazu eingerichtet ist,
- den lokalisierten Fasern jeweils einen Wirkungsbereich (W) zuzuordnen,
- für mehrere verschiedene Orte des Wertdokumentbilds jeweils lokal die Wirkungsbereiche der am jeweiligen Ort und ggf. in dessen Umgebung vorhandenen Fasern, insbesondere im Hinblick auf die von den Wirkungsbereichen (W) abgedeckte bzw. nicht-abgedeckte Fläche oder im Hinblicke auf den Überlapp benachbarter Wirkungsbereiche, zu analysieren und
- den jeweiligen lokalen Faser-Kennwert des jeweiligen Orts auf Basis der lokalen Analyse der Wirkungsbereiche (W) zu ermitteln, die am jeweiligen Ort und ggf. in dessen Umgebung liegen,
wobei die Auswerteeinrichtung (19), zum Auswerten des Wertdokumentbilds bevorzugt dazu eingerichtet ist, die Größe der Wirkungsbereiche (W) jeweils in Abhängigkeit eines Dichte-Erwartungswerts (DE) zu wählen, der die für das Wertdokumentbild und ggf. für den jeweiligen Ort des Wertdokumentbilds erwartete Flächendichte der Fasern angibt.

13. Sensor (25) nach Anspruch 10, wobei die Auswerteeinrichtung (19), zum Auswerten des Wertdokumentbilds dazu eingerichtet ist,
- den lokalisierten Fasern des Wertdokumentbilds bzw. des jeweiligen Teilbilds bzw. des jeweiligen Umgebungsbereichs jeweils einen Wirkungsbereich zuzuordnen und
∘ Überdeckungsbereiche zu identifizieren, die zum Wirkungsbereich mindestens einer der Fasern gehören, und/oder
∘ Freibereiche zu identifizieren von, die zu keinem Wirkungsbereich mindestens einer der Fasern gehören, und/oder
∘ Überlappungsbereiche zu identifizieren, in denen die Wirkungsbereiche mindestens zweier benachbarter Fasern überlappen, und
- eine oder mehrere auffällige Regionen des Wertdokumentbilds zu identifizieren, die im Hinblick auf ihre Überdeckungsbereiche und/oder Freibereiche und/oder Überlappungsbereiche auffällig sind, und
- das Wertdokuments als fälschungsverdächtig zu klassifizieren in Abhängigkeit einer oder mehrerer Eigenschaften der Überdeckungsbereiche und/oder der Freibereiche und/oder der Überlappungsbereiche in/an einem oder mehreren auffälligen Regionen des Wertdokumentbilds.

14. Sensor (25) nach einem der vorhergehenden Ansprüche, wobei die Auswerteeinrichtung (19), zum Auswerten des Wertdokumentbilds dazu eingerichtet ist,
- für einen oder mehrere Orte des Wertdokumentbilds den lokalen Faser-Kennwert des jeweiligen Orts mit einem Erwartungswert zu vergleichen, wobei der Erwartungswert für das jeweilige Wertdokument, und ggf. für den jeweiligen Ort des jeweiligen Wertdokuments,
∘ vorbestimmt ist oder
∘ die Auswerteeinrichtung (19) dazu eingerichtet ist, den Erwartungswert, mit dem der lokale Faser-Kennwert des jeweiligen Orts verglichen wird, auf Basis der lokale Faser-Kennwerte zu bestimmen, die für einen oder mehrere andere Orte desselben Wertdokumentbilds ermittelt werden, und
- das Wertdokument (3) in Abhängigkeit der für einen oder mehrere Orte des Wertdokumentbilds erhaltenen Ergebnisse des Vergleichens als fälschungsverdächtig zu klassifizieren, insbesondere in Abhängigkeit eines Unterschieds, der sich bei dem Vergleichen zwischen dem lokalen Faser-Kennwert des jeweiligen Orts und dem Erwartungswert ergibt.

15. Sensor nach einem der vorhergehenden Ansprüche, **dadurch gekennzeichnet, dass** das Wertdokumentbild ein erstes Wertdokumentbild ist, das von einer ersten Wertdokumentseite eines zu prüfenden Wertdokuments (3) erfasst wird, und die Auswerteeinrichtung über ein zweites Wertdokumentbild verfügt, das von der der ersten Seite gegenüberliegenden zweiten Seite desselben Wertdokuments erfasst wird oder wurde, und die Auswerteeinrichtung (19) dazu eingerichtet ist,
- für mindestens ein erstes Teilbild (11) des ersten Wertdokumentbilds und für mindestens ein zweites Teilbild (11') des zweiten Wertdokumentbilds jeweils mindestens einen lokalen Faser-Kennwert zu bestimmen, und
- ggf. den lokalen Faser-Kennwert des ersten Teilbilds und den lokalen Faser-Kennwert des zweiten Teilbilds miteinander zu kombinieren oder diese miteinander zu vergleichen, und
- das Wertdokument (3) in Abhängigkeit des lokalen Faser-Kennwerts des ersten Teilbilds und in Abhängigkeit des lokalen Faser-Kennwerts des zweiten Teilbilds als fälschungsverdächtig zu klassifizieren, insbesondere in Abhängigkeit eines Ergebnisses des Kombinierens oder in Abhängigkeit eines Ergebnisses des Vergleichens,
wobei das zweite Teilbild vorzugsweise ein zu dem ersten Teilbild korrespondierendes zweites Teilbild ist, das ein Ausschnitt des zweiten Wertdokumentbilds ist, wobei das erste Teilbild und das korrespondierende zweite Teilbild die optischen oder magnetischen Signale der Vorder- und Rückseite desselben Wertdokumentabschnitts des Wertdokuments (3) enthalten.

16. Wertdokumentbearbeitungsvorrichtung (1) mit
- einem Sensor (25) gemäß einem der vorhergehenden Ansprüche und
- einer Transporteinrichtung (10) zum Einbringen der Wertdokumente in den Erfassungsbereich des Sensors (25).

17. Verfahren zur Prüfung eines Wertdokuments (3) mit Hilfe eines Sensors, insbesondere mit Hilfe des Sensors gemäß einem Ansprüche 1-15, wobei das Wertdokument eine Vielzahl von Fasern aufweist, die über das Wertdokument verteilt sind, und wobei bei dem Verfahren folgende Schritte durchgeführt werden:
- Einbringen des Wertdokuments (3) in den Erfassungsbereich des Sensors (25) und Erfassen eines Wertdokumentbilds des Wertdokuments mit Hilfe einer Bilderfassungseinrichtung des Sensors, wobei in dem Wertdokumentbild ein charakteristisches optisches oder magnetisches Signal der Fasern enthalten ist,
- Auswerten des Wertdokumentbilds mit Hilfe einer Auswerteeinrichtung (19) des Sensors, die zum Auswerten des Wertdokumentbilds dazu eingerichtet ist,
- die Fasern zu lokalisieren, die in dem jeweiligen Wertdokumentbild enthalten sind, und
- für mehrere verschiedene Orte des Wertdokumentbilds jeweils mindestens einen lokalen Faser-Kennwert zu ermitteln, der für den jeweiligen Ort und ggf. für eine Umgebung des jeweiligen Orts gilt, wobei die Auswerteeinrichtung (19) über eine Information über die Wertdokumentart des zu prüfenden Wertdokuments verfügt, welche die Währung oder die Denomination des zu prüfenden Wertdokuments ist, und dazu eingerichtet ist, die Orte des Wertdokumentbilds, für die der jeweilige lokale Faser-Kennwert bestimmt wird, in Abhängigkeit der Wertdokumentart des zu prüfenden Wertdokuments zu bestimmen, und
- das Wertdokument (3) in Abhängigkeit des mindestens einen lokalen Faser-Kennwerts als fälschungsverdächtig oder nicht fälschungsverdächtig zu klassifizieren.

## Claims

1. Sensor (25) for verifying a value document which comprises a multiplicity of fibres distributed over the value document and which is brought into a capture region of the sensor for the purpose of verifying said value document, wherein the sensor comprises:
- an image capture device configured to capture a value document image of the value document (3), wherein the value document image shows a characteristic optical or magnetic signal of the fibres, and
- an evaluation device (19), which, for the purpose of evaluating the value document image, is configured
- to localize the fibres contained in the respective value document image, and
- to ascertain for a plurality of different locations of the value document image in each case at least one local fibre characteristic value which applies to the respective location and optionally to surroundings of the respective location on the value document image, wherein the evaluation device (19) has information about the value document type of the value document to be verified, the information being the currency or the denomination of the value document to be verified, and said evaluation device is configured to determine those locations of the value document image for which the respective local fibre characteristic value is determined depending on the value document type of the value document to be verified, and
- to classify the value document (3) as suspected counterfeit or not suspected counterfeit depending on the at least one local fibre characteristic value.

2. Sensor (25) according to Claim 1, wherein the evaluation device (19), for the purpose of evaluating the value document image, is configured to scan the value document image point by point using grid points (R), wherein a local fibre characteristic value is ascertained for each grid point of the value document image, and to classify the value document (3) as suspected counterfeit depending on the local fibre characteristic values ascertained for the grid points.

3. Sensor (25) according to Claim 2, wherein the evaluation device (19), for the purpose of evaluating the value document image, is configured
- to identify one or more conspicuous grid points which are conspicuous with regard to the local fibre characteristic value ascertained at the respective grid point,
- to identify one or more conspicuous regions of the value document image in which conspicuous grid points are situated, and
- to classify the value document as suspected counterfeit depending on one or more properties of the respective conspicuous region and/or depending on the local fibre characteristic values which were ascertained for the grid points of the respective conspicuous region.

4. Sensor (25) according to Claim 2 or 3, wherein the evaluation device (19),
- for the purpose of evaluating the value document image, is configured to ascertain the local fibre characteristic value ascertained for the respective grid point of the value document image for a surrounding region (111-119, 141-149) assigned to the respective grid point, or,
- for the purpose of evaluating the value document image, is configured to ascertain the respective local fibre characteristic value ascertained for the respective grid point of the value document image pointwise for the respective grid point.

5. Sensor according to any of the preceding claims, wherein the evaluation device (19), for the purpose of evaluating the value document image, is configured
- to determine one or more partial images (11-14, 21-24, 111-119, 141-149) of the value document image, each of which contains a segment of the value document image, wherein the respective partial image of the value document image can be in particular a surrounding region around a respective one of the grid points according to Claim 4,
- to determine the local fibre characteristic value for the respective partial image,
- to classify the value document (3) as suspected counterfeit depending on the local fibre characteristic value(s) of one or more of the partial images.

6. Sensor (25) according to any of the preceding claims, wherein the local fibre characteristic value used is a measure of local density of the fibres, in particular
- the number (N) of fibres situated in the surroundings of the respective location, in particular in the respective partial image (11-14, 21-24) or in the respective surrounding region (111-119, 141-149) around a grid point, or
- the fibre density in the surroundings of the respective location, in particular in the respective partial image or in the respective surrounding region, or
- a distance measure - which is characteristic of the distance between the fibres - of the fibres in the surroundings of the respective location, e.g. a mean distance of the fibres of the partial image or of the surrounding region from the fibre that is the most closely adjacent to the respective fibre.

7. Sensor according to either of Claims 5 and 6, **characterized in that** the evaluation device (19) is configured to determine at least two partial images of the value document image which together cover preferably at least 50% of the area of a value document side of the value document, particularly preferably at least 75% of the area of a value document side of the value document, wherein the partial images are arranged in particular in rows and/or in columns on the value document, wherein the partial images are arranged for example in a grid composed of at least two rows and/or at least two columns on the value document.

8. Sensor (25) according to any of the preceding claims, wherein the local fibre characteristic value used is a measure of the local constitution of the fibres at the respective location and optionally in the surroundings of the respective location, which concerns in particular the shape or size or colour or brightness of the fibres at the respective location and optionally in the surroundings of the respective location, wherein the local fibre characteristic value used is a representative value, e.g. a mean value, of the local constitution of the fibres at the respective location and optionally in the surroundings of the respective location.

9. Sensor (25) according to any of the preceding claims, which is configured, on the basis of one or more properties of the fibres localized in the value document image and/or on the basis of one or more of the local fibre characteristic values of the respective value document which were ascertained for the different location(s) of the value document image, to determine individual fingerprint data of the respective value document, to assign the individual fingerprint data to processing data of the respective value document and to store them together with the processing data of the respective value document, optionally in a list for a plurality of value documents, in each case in a manner assigned to one another.

10. Sensor according to any of the preceding claims, **characterized in that** the evaluation device (19) has information about the value document type of the value document to be verified and is configured to carry out the determining of the partial images depending on the value document type of the value document to be verified, wherein e.g. a plurality of partial images are fixedly predefined in the evaluation device and the evaluation device is configured to determine specific partial images for evaluation purposes from these fixedly predefined partial images depending on the value document type of the value document to be verified.

11. Sensor according to any of the preceding claims, **characterized in that**
- the sensor is configured for verifying value documents of one or more specific value document types, the value documents of which comprise in each case at least one disturbing security element (68) which adversely affects the capture of the characteristic optical or magnetic signal of the fibres, and
- the evaluation device (19) of the sensor is configured to classify the value documents of the specific value document type as suspected counterfeit depending on the at least one local fibre characteristic value of only one or more such locations of the value document image at which the capture of the optical or magnetic signal of the fibres is not adversely affected by the at least one disturbing security element (68).

12. Sensor (25) according to any of the preceding claims, wherein the evaluation device (19), for the purpose of evaluating the value document image, is configured
- to assign an effect region (W) to each of the localized fibres,
- for a plurality of different locations of the value document image to analyse in each case locally the effect regions of the fibres present at the respective location and optionally in the surroundings thereof, in particular with regard to the area covered or not covered by the effect regions (W) or with regard to the overlap of adjacent effect regions, and
- to ascertain the respective local fibre characteristic value of the respective location on the basis of the local analysis of the effect regions (W) which lie at the respective location and optionally in the surroundings thereof,
wherein the evaluation device (19), for the purpose of evaluating the value document image, is preferably configured to choose the size of the effect regions (W) in each case depending on an expected density value (DE) indicating the area density of the fibres that is expected for the value document image and optionally for the respective location of the value document image.

13. Sensor (25) according to Claim 10, wherein the evaluation device (19), for the purpose of evaluating the value document image, is configured
- to assign an effect region to each of the localized fibres of the value document image or of the respective partial image or of the respective surrounding region and
∘ to identify coverage regions which belong to the effect region of at least one of the fibres, and/or
∘ to identify free regions which do not belong to any effect region of at least one of the fibres, and/or
∘ to identify overlap regions in which the effect regions of at least two adjacent fibres overlap, and
- to identify one or more conspicuous regions of the value document image which are conspicuous with regard to their coverage regions and/or free regions and/or overlap regions, and
- to classify the value document as suspected counterfeit depending on one or more properties of the coverage regions and/or the free regions and/or the overlap regions in/at one or more conspicuous regions of the value document image.

14. Sensor (25) according to any of the preceding claims, wherein the evaluation device (19), for the purpose of evaluating the value document image, is configured
- for one or more locations of the value document image to compare the local fibre characteristic value of the respective location with an expected value, wherein the expected value, for the respective value document, and optionally for the respective location of the respective value document,
∘ is predetermined or
∘ the evaluation device (19) is configured to determine the expected value with which the local fibre characteristic value of the respective location is compared on the basis of the local fibre characteristic values which are ascertained for one or more other locations of the same value document image, and
- to classify the value document (3) as suspected counterfeit depending on the comparison results obtained for one or more locations of the value document image, in particular depending on a difference established during the comparison between the local fibre characteristic value of the respective location and the expected value.

15. Sensor according to any of the preceding claims, **characterized in that** the value document image is a first value document image, which is captured from a first value document side of a value document (3) to be verified, and the evaluation device has a second value document image, which is or was captured from the second side - opposite the first side - of the same value document, and the evaluation device (19) is configured
- to determine in each case at least one local fibre characteristic value for at least one first partial image (11) of the first value document image and for at least one second partial image (11') of the second value document image, and
- optionally to combine the local fibre characteristic value of the first partial image and the local fibre characteristic value of the second partial image with one another or to compare these with one another, and
- to classify the value document (3) as suspected counterfeit depending on the local fibre characteristic value of the first partial image and depending on the local fibre characteristic value of the second partial image, in particular depending on a result of the combination or depending on a result of the comparison,
wherein the second partial image is preferably a second partial image which corresponds to the first partial image and which is a segment of the second value document image, wherein the first partial image and the corresponding second partial image contain the optical or magnetic signals of the front and rear sides of the same value document section of the value document (3).

16. Value document processing apparatus (1) comprising
- a sensor (25) according to any of the preceding claims and
- a transport device (10) for introducing the value documents into the capture region of the sensor (25).

17. Method for verifying a value document (3) with the aid of a sensor, in particular with the aid of the sensor according to any of Claims 1-15, wherein the value document comprises a multiplicity of fibres distributed over the value document, and wherein the following steps are carried out in the method:
- introducing the value document (3) into the capture region of the sensor (25) and capturing a value document image of the value document with the aid of an image capture device of the sensor, wherein the value document image contains a characteristic optical or magnetic signal of the fibres,
- evaluating the value document image with the aid of an evaluation device (19) of the sensor, which evaluation device, for the purpose of evaluating the value document image, is configured
- to localize the fibres contained in the respective value document image, and
- to ascertain for a plurality of different locations of the value document image in each case at least one local fibre characteristic value which applies to the respective location and optionally to surroundings of the respective location, wherein the evaluation device (19) has information about the value document type of the value document to be verified, the information being the currency or the denomination of the value document to be verified, and said evaluation device is configured to determine those locations of the value document image for which the respective local fibre characteristic value is determined depending on the value document type of the value document to be verified, and
- to classify the value document (3) as suspected counterfeit or not suspected counterfeit depending on the at least one local fibre characteristic value.

## Revendications

1. Capteur (25) permettant de vérifier un document de valeur qui présente une pluralité de fibres réparties sur le document de valeur et qui est amené dans une zone de détection du capteur pour être vérifié, le capteur présentant :
- un dispositif de détection d'image qui est conçu pour détecter une image de document de valeur du document de valeur (3), l'image de document de valeur montrant un signal optique ou magnétique caractéristique des fibres, et
- un dispositif d'évaluation (19) qui, pour l'évaluation de l'image de document de valeur, est conçu pour
- localiser les fibres qui sont contenues dans l'image de document de valeur respective, et
- établir pour plusieurs endroits différents de l'image de document de valeur respectivement au moins une valeur caractéristique de fibre locale qui est valable pour l'endroit respectif et le cas échéant pour un environnement de l'endroit respectif sur l'image de document de valeur, dans lequel le dispositif d'évaluation (19) dispose d'une information concernant le type de document de valeur du document de valeur à vérifier qui est la monnaie ou la dénomination du document de valeur à vérifier, et est conçu pour déterminer les endroits de l'image de document de valeur pour lesquels la valeur caractéristique de fibre locale respective est déterminée en fonction du type de document de valeur du document de valeur à vérifier, et
- classifier le document de valeur (3) comme suspecté de falsification ou non suspecté de falsification en fonction de ladite au moins une valeur caractéristique de fibre locale.

2. Capteur (25) selon la revendication 1, dans lequel, pour l'évaluation de l'image de document de valeur, le dispositif d'évaluation (19) est conçu pour balayer point par point l'image de document de valeur en utilisant des points de trame (R), dans lequel une valeur caractéristique de fibre locale est établie pour chaque point de trame de l'image de document de valeur, et pour classifier le document de valeur (3) comme suspecté de falsification en fonction des valeurs caractéristiques de fibre locales établies pour les points de trame.

3. Capteur (25) selon la revendication 2, dans lequel, pour l'évaluation de l'image de document de valeur, le dispositif d'évaluation (19) est conçu pour
- identifier un ou plusieurs points de trame suspects qui sont suspects en ce qui concerne la valeur caractéristique de fibre locale établie au point de trame respectif,
- identifier une ou plusieurs régions suspectes de l'image de document de valeur dans lesquelles se trouvent des points de trame suspects, et
- classifier le document de valeur comme suspecté de falsification en fonction d'une ou de plusieurs propriétés de la région suspecte respective et/ou en fonction des valeurs caractéristiques de fibre locales pour les points de trame de la région suspecte respective.

4. Capteur (25) selon la revendication 2 ou 3, dans lequel le dispositif d'évaluation (19)
- est conçu, pour l'évaluation de l'image de document de valeur, pour établir la valeur caractéristique de fibre locale qui est établie pour le point de trame respectif de l'image de document de valeur pour une zone environnante (111-119, 141-149) associée au point de trame respectif, ou
- est conçu, pour l'évaluation de l'image de document de valeur, pour établir la valeur caractéristique de fibre locale respective qui est établie pour le point de trame respectif de l'image de document de valeur ponctuellement pour le point de trame respectif.

5. Capteur selon l'une quelconque des revendications précédentes, dans lequel, pour l'évaluation de l'image de document de valeur, le dispositif d'évaluation (19) est conçu pour
- déterminer une ou plusieurs images partielles (11-14, 21-24, 111-119, 141-149) de l'image de document de valeur qui contiennent respectivement une section de l'image de document de valeur, dans lequel l'image partielle respective de l'image de document de valeur peut être en particulier une zone environnante respectivement d'un des points de trame selon la revendication 4,
- déterminer la valeur caractéristique de fibre locale pour l'image partielle respective,
- classifier le document de valeur (3) comme suspecté de falsification en fonction de la ou des valeurs caractéristiques de fibre locales d'une ou de plusieurs des images partielles.

6. Capteur (25) selon l'une quelconque des revendications précédentes, dans lequel une mesure de la densité locale des fibres est utilisée comme valeur caractéristique de fibre locale, en particulier
- le nombre (N) de fibres qui se trouvent dans l'environnement de l'endroit respectif, en particulier sur l'image partielle respective (11-14, 21-24) ou dans la zone environnante respective (111-119, 141-149) d'un point de trame, ou
- la densité de fibres dans l'environnement de l'endroit respectif, en particulier sur l'image partielle respective ou dans la zone environnante respective, ou
- une mesure d'espacement des fibres caractéristique de l'espacement entre les fibres dans l'environnement de l'endroit respectif, par exemple un espacement moyen des fibres de l'image partielle ou de la zone environnante de la fibre la plus proche de la fibre respective.

7. Capteur selon l'une quelconque des revendications 5 à 6, **caractérisé en ce que** le dispositif d'évaluation (19) est conçu pour déterminer pour au moins deux images partielles de l'image de document de valeur qui occupent ensemble de préférence au moins 50 % de la superficie d'une face de document de valeur du document de valeur, en particulier de préférence au moins 75 % de la superficie d'une face de document de valeur du document de valeur, dans lequel les images partielles sont disposées en particulier par lignes et/ou par colonnes sur le document de valeur, dans lequel les images partielles sont disposées par exemple dans une trame composée d'au moins deux lignes et/ou d'au moins deux colonnes sur le document de valeur.

8. Capteur (25) selon l'une quelconque des revendications précédentes, dans lequel on utilise comme valeur caractéristique de fibre locale une mesure de la nature locale des fibres à l'endroit respectif ou le cas échéant dans l'environnement de l'endroit respectif qui concerne en particulier la forme ou la taille ou la couleur ou la luminosité des fibres à l'endroit respectif ou le cas échéant dans l'environnement de l'endroit respectif, dans lequel on utilise comme valeur caractéristique de fibre locale une valeur représentative, par exemple une moyenne, de la nature locale des fibres à l'endroit respectif ou le cas échéant dans l'environnement de l'endroit respectif.

9. Capteur (25) selon l'une quelconque des revendications précédentes, qui est conçu pour déterminer à l'aide d'une ou de plusieurs propriétés des fibres localisées sur l'image de document de valeur et/ou à l'aide d'une ou de plusieurs des valeurs caractéristiques de fibre locales du document de valeur respectif qui ont été établies pour le ou les différents endroits de l'image de document de valeur, des données d'empreinte digitale individuelles du document de valeur respectif, pour attribuer les données d'empreinte digitale individuelles à des données de traitement du document de valeur respectif et pour les stocker conjointement avec les données de traitement du document de valeur respectif, le cas échéant dans une liste pour plusieurs documents de valeur, de manière respectivement associée les unes aux autres.

10. Capteur selon l'une quelconque des revendications précédentes, **caractérisé en ce que** le dispositif d'évaluation (19) dispose d'une information concernant le type de document de valeur du document de valeur à vérifier et est conçu pour effectuer la détermination des images partielles en fonction du type de document de valeur du document de valeur à vérifier,
dans lequel par exemple plusieurs images partielles sont prédéfinies de façon permanente dans le dispositif d'évaluation, et le dispositif d'évaluation est conçu pour déterminer parmi ces images partielles prédéfinies de façon permanente des images partielles destinées à l'évaluation en fonction du type de document de valeur du document de valeur à vérifier.

11. Capteur selon l'une quelconque des revendications précédentes, **caractérisé en ce que**
- le capteur est conçu pour vérifier des documents de valeur d'un ou de plusieurs types de document de valeur déterminés dont les documents de valeur présentent respectivement au moins un élément de sécurité perturbateur (68) qui affecte la détection du signal optique ou magnétique caractéristique des fibres, et
- le dispositif d'évaluation (19) du capteur est conçu pour classifier comme suspectés de falsification les documents de valeur du type de document de valeur déterminé en fonction de ladite au moins une valeur caractéristique de fibre locale d'un seul ou de plusieurs de ces endroits de l'image de document de valeur dans lesquels la détection du signal optique ou magnétique des fibres n'est pas affectée par ledit au moins un élément de sécurité perturbateur (68).

12. Capteur (25) selon l'une quelconque des revendications précédentes, dans lequel pour l'évaluation de l'image de document de valeur, le dispositif d'évaluation (19) est conçu pour
- associer respectivement une zone active (W) aux fibres localisées,
- analyser pour plusieurs endroits différents de l'image de document de valeur respectivement localement les zones actives des fibres présentes à l'endroit respectif et le cas échéant dans son environnement, en particulier en ce qui concerne la superficie couverte ou non couverte par les zones actives (W) ou en ce qui concerne le chevauchement de zones actives voisines, et
- établir la valeur caractéristique de fibre locale respective de l'endroit respectif sur la base de l'analyse locale des zones actives (W) qui se trouvent à l'endroit respectif et le cas échéant dans son environnement,
dans lequel, pour l'évaluation de l'image de document de valeur, le dispositif d'évaluation (19) est conçu de préférence pour sélectionner la taille des zones actives (W) respectivement en fonction d'une valeur attendue de densité (DE) qui indique la densité de surface des fibres attendue pour l'image de document de valeur et le cas échéant pour l'endroit respectif de l'image de document de valeur.

13. Capteur (25) selon la revendication 10, dans lequel, pour l'évaluation de l'image de document de valeur, le dispositif d'évaluation (19) est conçu pour
- associer respectivement une zone active aux fibres localisées de l'image de document de valeur ou de l'image partielle respective ou de la zone environnante respective, et
∘ identifier des zones de chevauchement qui appartiennent à la zone active d'au moins l'une des fibres, et/ou
∘ identifier des zones libres qui n'appartiennent à aucune zone active d'au moins l'une des fibres, et/ou
∘ identifier des zones de chevauchement dans lesquelles les zones actives d'au moins deux fibres voisines se chevauchent, et
- identifier une ou plusieurs régions suspectes de l'image de document de valeur qui sont suspectes en ce qui concerne leurs zones de recouvrement et/ou leurs zones libres et/ou leurs zones de chevauchement, et
- classifier le document de valeur comme suspecté de falsification en fonction d'une ou de plusieurs propriétés des zones de recouvrement et/ou des zones libres et/ou des zones de chevauchement dans/sur une ou plusieurs régions suspectes de l'image de document de valeur.

14. Capteur (25) selon l'une quelconque des revendications précédentes, dans lequel, pour l'évaluation de l'image de document de valeur, le dispositif d'évaluation (19) est conçu pour
- comparer pour un ou plusieurs endroits de l'image de document de valeur la valeur caractéristique de fibre locale de l'endroit respectif avec une valeur attendue, dans lequel la valeur attendue pour le document de valeur respectif et le cas échéant pour l'endroit respectif du document de valeur respectif
∘ est prédéterminée, ou
∘ le dispositif d'évaluation (19) est conçu pour déterminer la valeur attendue avec laquelle la valeur caractéristique de fibre locale de l'endroit respectif est comparée sur la base des valeurs caractéristiques de fibre locales qui sont établies pour un ou plusieurs autres endroits de la même image de document de valeur, et
- pour classifier le document de valeur (3) comme suspecté de falsification en fonction des résultats de la comparaison obtenus pour un ou plusieurs endroits de l'image de document de valeur, en particulier en fonction d'une différence qui résulte lors de la comparaison entre la valeur caractéristique de fibre locale de l'endroit respectif et la valeur attendue.

15. Capteur selon l'une quelconque des revendications précédentes, **caractérisé en ce que** l'image de document de valeur est une première image de document de valeur qui est détectée à partir d'une première face de document de valeur d'un document de valeur (3) à vérifier, et le dispositif d'évaluation dispose d'une deuxième image de document de valeur qui est ou a été détectée à partir de la deuxième face opposée à la première face du même document de valeur, et le dispositif d'évaluation (19) est conçu pour
- déterminer pour au moins une première image partielle (11) de la première image de document de valeur et pour au moins une deuxième image partielle (11') de la deuxième image de document de valeur respectivement au moins une valeur caractéristique de fibre locale, et
- le cas échéant, combiner l'une avec l'autre la valeur caractéristique de fibre locale de la première image partielle et la valeur caractéristique de fibre locale de la deuxième image partielle ou les comparer l'une avec l'autre, et
- classifier le document de valeur (3) comme suspecté de falsification en fonction de la valeur caractéristique de fibre locale de la première image partielle et en fonction de la valeur caractéristique de fibre locale de la deuxième image partielle, en particulier en fonction d'un résultat de la combinaison ou en fonction d'un résultat de la comparaison,
dans lequel la deuxième image partielle est de préférence une deuxième image partielle correspondant à la première image partielle et qui est une section de la deuxième image de document de valeur, dans lequel la première image partielle et la deuxième image partielle correspondante contiennent les signaux optiques ou magnétiques de la face avant et de la face arrière de la même partie de document de valeur du document de valeur (3).

16. Dispositif de traitement de document de valeur (1), comprenant
- un capteur (25) selon l'une quelconque des revendications précédentes, et
- un dispositif de transport (10) pour introduire les documents de valeur dans la zone de détection du capteur (25).

17. Procédé permettant de vérifier un document de valeur (3) à l'aide d'un capteur, en particulier à l'aide du capteur selon l'une quelconque des revendications 1 à 15, dans lequel le document de valeur présente une pluralité de fibres qui sont réparties sur le document de valeur, et dans lequel dans le procédé les étapes suivantes sont exécutées, consistant à :
- introduire le document de valeur (3) dans la zone de détection du capteur (25) et détecter une image de document de valeur du document de valeur à l'aide d'un dispositif de détection d'image du capteur, dans lequel l'image de document de valeur contient un signal optique ou magnétique caractéristique des fibres,
- évaluer l'image de document de valeur à l'aide d'un dispositif d'évaluation (19) du capteur, qui, pour l'évaluation de l'image de document de valeur, est conçu pour
- localiser les fibres qui sont contenues sur l'image de document de valeur respective, et
- établir pour plusieurs endroits différents de l'image de document de valeur respectivement au moins une valeur caractéristique de fibre locale qui est valable pour l'endroit respectif et le cas échéant pour un environnement de l'endroit respectif, dans lequel le dispositif d'évaluation (19) dispose d'une information concernant le type de document de valeur du document de valeur à vérifier qui est la monnaie ou la dénomination du document de valeur à vérifier, et est conçu pour déterminer les endroits de l'image de document de valeur pour lesquels la valeur caractéristique de fibre locale respective est déterminée en fonction du type de document de valeur du document de valeur à vérifier, et
- classifier le document de valeur (3) comme suspecté de falsification ou non suspecté de falsification en fonction de ladite au moins une valeur caractéristique de fibre locale.
